(19) Europäisches Patentamt
European Patent Office
Office européen des brevets

(11) **EP 2 714 623 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(51) Int Cl.:
*C04B 41/49* (2006.01)    *C07F 7/08* (2006.01)
*C07F 7/18* (2006.01)

(21) Anmeldenummer: **12722097.8**

(22) Anmeldetag: **07.05.2012**

(86) Internationale Anmeldenummer:
**PCT/EP2012/058370**

(87) Internationale Veröffentlichungsnummer:
**WO 2012/159874 (29.11.2012 Gazette 2012/48)**

(54) **ORGANOSILICONATPULVER, EIN VERFAHREN ZU IHRER HERSTELLUNG SOWIE IHRE VERWENDUNG ZUR HYDROPHOBIERUNG VON MINERALISCHEN BAUSTOFFEN**

ORGANOSILICONATE POWDERS, METHOD FOR THE PRODUCTION THEREOF AND USE THEREOF FOR HYDROPHOBIZING MINERAL BUILDING MATERIALS

POUDRE D'ORGANOSILICONATE, PROCÉDÉ POUR LA PRODUCTION DE LADITE POUDRE D'ORGANOSILICONATE ET UTILISATION DE CETTE DERNIÈRE POUR L'HYDROPHOBISATION DE MATÉRIAUX DE CONSTRUCTION MINÉRAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2011 DE 102011076303**
**24.05.2011 DE 102011076344**

(43) Veröffentlichungstag der Anmeldung:
**09.04.2014 Patentblatt 2014/15**

(73) Patentinhaber: **Wacker Chemie AG**
**81737 München (DE)**

(72) Erfinder:
• **STEPP, Michael**
**5122 Überackern (AT)**
• **AUER, Dominik**
**84453 Mühldorf (DE)**
• **FELIX, Karl-Heinz**
**84367 Reut (DE)**
• **SCHILDBACH, Daniel**
**84503 Altötting (DE)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
**US-A- 3 956 570     US-A- 4 252 569**

**Beschreibung**

Die Erfindung betrifft Organosiliconatpulver, ein Verfahren zu ihrer Herstellung sowie ihre Verwendung, insbesondere zur Hydrophobierung von mineralischen Baustoffen.

Alkaliorganosiliconate werden schon seit Jahrzehnten zur Hydrophobierung, d.h. wasserabweisenden Ausrüstung, von Baustoffen eingesetzt. In der Regel sind dies anorganische Baustoffe, die silicatischer und nicht-silicatischer Natur sein können. Hier hat vor allem die wässrige Lösung des Methylsiliconats eine große Bedeutung. Dabei handelt es sich insbesondere um das Kalium- (Kaliummethylsiliconat) oder das Natriumderivat (Natriummethylsiliconat). Sie lassen sich aufgrund ihrer guten Wasserlöslichkeit als wässrige Lösung auf Feststoffen applizieren, wo sie nach Verdampfen des Wassers unter dem Einfluss von Kohlendioxid festhaftende, dauerhaft wasserabweisende Oberflächen bilden. Da sie praktisch keine hydrolytisch abspaltbaren organischen Reste enthalten, erfolgt die Aushärtung vorteilhafterweise ohne Freisetzung unerwünschter flüchtiger, organischer Nebenprodukte.

Wässrige Lösungen von Organosiliconaten sind besonders gut zur Hydrophobierung von schwach sauren bis schwach alkalischen Baustoffen geeignet, insbesondere von Produkten aus gebranntem Ton, Naturstein, Zement oder Gips.
Dabei kann die Applikation des Hydrophobiermittels entweder durch Imprägnierung oder Massehydrophobierung erfolgen. Bei der Imprägnierung werden zum Beispiel Produkte aus gebranntem Ton oder Naturstein für eine gewisse Zeit in eine wässrige Verdünnung des Organosiliconats getaucht oder mit einer solchen Verdünnung besprüht, wobei die Aktivsubstanz gelöst in Wasser kapillar in das Porengefüge des Baustoffs eindringt. Je nach vorherrschenden Bedingungen entwickelt sich nach einer Zeit von wenigen Minuten über mehrere Stunden bis hin zu einigen Tagen nach Trocknung des Baustoffs eine hydrophobe Zone, die den Baustoff umgibt und seine kapillare Wasseraufnahme drastisch senkt. Bei der Massehydrophobierung wird die wässrige Lösung des Organosiliconats ggf. nach weiterer Verdünnung mit dem wässrigen Slurry (Brei) eines Baustoffs vermischt. Nach dem Abbinden und Trocknen des Baustoffes wird eine stark reduzierte Wasseraufnahme verglichen mit dem unhydrophobierten Baustoff gemessen.

Beispielsweise ist in US 2803561 die Verwendung wässriger Lösungen von Organosiliconaten und von Methylsiliconatpulver zum Hydrophobieren von calciumhaltigem Mauerwerk (Gips, Kalkstein) beschrieben.

Die Herstellung von Alkaliorganosiliconaten insbesondere Kalium- bzw. Natriummethylsiliconaten wurde vielfach beschrieben. In den meisten Fällen steht dabei die Herstellung von anwendungsfertigen und lagerstabilen, wässrigen Lösungen im Vordergrund.

Beispielsweise wird in EP 650968 ein kontinuierliches Verfahren ausgehend von Organotrichlorsilanen über das Zwischenprodukt Organotrialkoxysilan beschrieben. Vorteilhaft ist dabei, dass die gebildeten Nebenprodukte Chlorwasserstoff und Alkohol zurückgewonnen werden und die gebildete Siliconat-Lösung praktisch chloridfrei ist.

Der Vorteil der Massehydrophobierung z.B. von Gips oder Zement ist, dass der Baustoff nicht nur von einer hydrophoben Zone umgeben ist, sondern durch und durch wasserabweisend ist. Dies ist insbesondere wichtig bei tendenziell wasserlöslichen Baustoffen wie Gips oder wenn der Baustoff nach der wasserabweisenden Behandlung in Stücke geschnitten wird. Dieses Verfahren findet z.B. bei der Herstellung von Gipskartonplatten, Gipswandbauplatten oder Gipsfaserplatten Anwendung. Putze und Spachtelmassen oder Fliesenkleber werden jedoch als Pulver in Säcken oder Silos auf die Baustelle geliefert und erst dort mit dem Anmachwasser angerührt. Für die Anwendung in gips- oder zementbasierten Putzen, Spachtelmassen, pulverförmigen Reparaturspachteln, Fliesenklebern und ähnlichen mineralischen Baustoffen wird daher ein festes Hydrophobiermittel benötigt, das der anwendungsfertigen Trockenmischung zugefügt werden kann und erst bei Zusatz von Wasser während der Applikation vor Ort, z.B. auf der Baustelle, in kurzer Zeit seine hydrophobierende Wirkung entfaltet. Dies nennt man Dry-Mix-Anwendung.
Bei den meisten herkömmlichen Dry-Mix-Hydrophobiermitteln gemäß dem aktuellen Stand der Technik handelt es sich um geträgerte Systeme, d.h. dass ein eigentlich flüssiges Hydrophobiermittel wie z.B. ein Silan- und/oder Siloxanwirkstoff auf ein chemisch mehr oder weniger inertes Trägermaterial aufgetragen wird. Dabei wird nur soviel Hydrophobiermittel aufgetragen, dass ein trockenes und rieselfähiges Pulver erhalten wird. So ergeben sich Aktivgehalte von nur 30-50 % - daraus folgt dass die Masse des nicht wirksamen Trägermaterials 50-70 % der Gesamtmasse einnimmt. Das Trägermaterial kann anorganischer Natur, z.B. Kieselsäuren, Silicate, oder organischer Natur, z.B. Polyvinylalkohole sein, wie beschrieben in WO 2010052201. Durch das Mischen mit dem Anmachwasser und intensives Vermischen entfaltet das flüssige Hydrophobiermittel seine Wirkung, während das Trägermaterial als funktionsloses Füllmaterial im ausgehärteten Baustoff verbleibt. Das Trägermaterial kann sogar negative Auswirkungen auf den fertig ausgehärteten Baustoff haben - so ist bekannt, dass Polyvinylalkohole die Hydrophilie von Gipsbaustoffen tendenziell erhöhen, was kontraproduktiv ist. Herkömmliche Dry-Mix-Hydrophobiermittel wie Salze von Fettsäuren haben eine Reihe von Nachteilen. Bei diesen bekannten Produkten tritt das Problem auf, dass durch die hohe Hydrophobie der Pulver und vorzeitige Migration des Hydrophobiermittels auf den noch mit Wasser zu mischenden Baustoff eine verzögerte Anmischbarkeit auftritt. Dadurch kommt es zusätzlich zum Zeitverlust zur Ausbildung von unerwünschtem Staub aus dem Baustoff durch die verzögerte Benetzung mit Wasser. Ebenfalls haben herkömmliche Dry-Mix-Hydrophobiermittel auf Siloxanbasis einen vergleichsweise niedrigen Aktivgehalt, weil sie meist aus einem flüssigen Siloxanwirkstoff auf einem festen Träger bestehen, wie beschrieben in WO 2010052201, Beispiel 1. Dem Träger kommt ausser der Trägerwirkung keine Bedeutung zu, außerdem würde eine Erhöhung des Aktivgehaltes zu klebrigen und nicht mehr rieselfähigen Dry-Mix-Hydrophobiermitteln führen. In der Folge sind diese Hydrophobiermittel nicht effizient genug.

Die höchsten Wirkstoffgehalte erzielt man mit ungeträgerten Systemen, wie den reinen, beispielsweise in US 2803561 beschriebenen Siliconat-Pulvern. Sie sind als Dry-Mix-Additive prinzipiell geeignet. Beispielsweise beschreibt DE OS 10107614 zementbasierte Fliesenkleber, die durch Zusatz von 0,1 bis 20% Alkalisiliconat als Trockenpulver wasserabweisend ausgestattet sind. Im Gegensatz zu den üblicherweise verwendeten Stearaten oder Oleaten sollen die im Baustoff sich bildenden Alkylkieselsäuren die Wasserdampfdurchlässigkeit gewährleisten und damit die Austrocknung von Mauerwerk oder Estrich nicht behindern. Erwähnt sind Alkali-Alkylsiliconate mit Methyl-, Ethyl-, sowie den verschiedenen isomeren Propyl- und Butylresten. Ein Nachteil dieser Additive ist, dass die wirksamsten Vertreter mit mehr als zwei C-Atomen im Alkylrest, nur über den teuren Zwischenschritt einer Hydrosilylierung zugänglich sind. Dagegen wirken Methylsiliconate, die aus Methyltrichlorsilan - einem Nebenprodukt des Müller-Rochow-Prozesses - deutlich kostengünstiger erhältlich sind, insbesondere in stark basischen zementbasierten Baustoffen aufgrund ihrer Wasserlöslichkeit nicht dauerhaft wasserabweisend.

Auch in US 2898221 sind Alkalialkylsiliconate mit Methyl-, Ethyl-,Propyl-, Vinyl- oder Allylrest als Additive für Beton beschrieben. Die auch in fester Form einsetzbaren Siliconate (Spalte 1/ Zeile 43) erhöhen nicht nur die Hydrophobie, sondern verleihen dem Baustoff in Anteilen von 0,05 - 0,7 % bezogen auf den eingesetzten Portlandzement auch eine höhere Druckfestigkeit, wobei jedoch mit einem verzögerten Abbindeverhalten zu rechnen ist (Spalte 2/ Zeile 2). Es können auch Mischungen verschiedener Siliconate zum Einsatz kommen (Spalte 1/ Zeile 56).

Laut DE 2245927 sind wässrige Lösungen von Alkalipropylsiliconaten auch in Abmischung mit anderen Alkylsiliconaten, insbesondere Methylsiliconaten, besonders wirksame Oberflächen-Hydrophobiermittel für stark basische Baustoffe, die noch nicht vollständig abgebunden haben. Ihre Herstellung erfolgt zweistufig durch Mischhydrolyse von Propyl-Trichlorsilan mit anderen Alkyl-Trichlorsilanen und anschließendes Lösen in Alkalilauge. Vergleichsbeispiele mit Methyl- und Ethyl-Siliconat zeigen deren geringe Permanenz der Hydrophobierwirkung auf Beton.

Aus dem beschriebenen Stand der Technik ist ersichtlich, dass kostengünstige und effiziente Dry Mix Additive auf Siliconat-Basis für einen universellen Einsatz sowohl in neutralen als auch basischen Baustoffen bislang nicht existieren. Die aus dem kostengünstigen Methyltrichlorsilan zugänglichen Methylsiliconate sind für Anwendungen in stark basischer Umgebung z.B. Zement aufgrund ihrer guten Wasserlöslichkeit weniger gut geeignet, was sich an einer geringen Permanenz des Hydrophobiereffektes zeigt. Dagegen müssen die in zementären Systemen wirksameren Siliconate mit Resten größer als Methyl über einen zusätzlichen Prozessschritt, eine teure Hydrosilylierungsreaktion mit einem Olefin als weiterem Rohstoff und vorzugsweise unter Einsatz von teuren Platinkatalysatoren, hergestellt werden. Mischungen aus Methylsiliconaten und Siliconaten mit größeren Resten besitzen neben dem Mehraufwand einer doppelten Prozesskette von Produktion bis Lagerhaltung einen weiteren großen Nachteil: mit zunehmender Größe des Organylrestes nimmt die Wasserbenetzbarkeit des Siliconatpulvers ab, sodass selbst geringe Anteile im anwendungsfertigen Baustoff zu den oben erwähnten Problemen wie verzögerte Anmischbarkeit und Staubbildung beim Anmischen mit Wasser führen können.

US 3,956,570 A offenbart feste Salze von Organosilanolen, nämlich Kaliumethylsilikonat / Kalium-n-propylsilkonat, in denen das Gew.-Verhältnis von $CH_3SiO_{3/2}$ : $C_3H_7SiO_{3/2}$ 1:3 ist und als Hydrophobiermittel Salze verwendet werden.

Das Ziel war deshalb, effizient hydrophobierende pulverförmigen Siliconate als Dry Mix Additive sowohl für neutrale als auch stark basische Baustoffe zu finden, die zu einem möglichst hohen Anteil auf dem kostengünstigen Methyltrichlorsilan basieren und dennoch eine hohe Wasserbenetzbarkeit und damit gute Einmischbarkeit aufweisen. Die Aufgabe wird durch die Erfindung gelöst.

Gegenstand der Erfindung sind feste Salze (P) von Organosilanolen, von deren Hydrolyse/Kondensationsprodukten, oder von Organosilanolen zusammen mit deren Hydrolyse/Kondensationsprodukten mit Alkali-Kationen, bei denen das Molverhältnis von Kation zu Silicium 0,5 bis 3 beträgt und von denen mindestens 1 Mol-% und höchstens 99 Mol-% der vorhandenen Organoreste aus Methyl- und Ethylresten ausgewählt werden und die übrigen Organoreste mindestens 4 C-Atome enthalten.

Überraschend wurde gefunden, dass Alkalisiliconate, die sowohl Methyl- oder Ethylreste als auch größere Organylreste tragen, trotz ihrer geringen Wasserlöslichkeit gut wasserbenetzbar sind, eine starke wasserabweisende Wirksamkeit bei hoher Permanenz aufweisen und in mineralischen Baustoffen universell einsetzbar sind.

Die festen Salze (P) aus diesen Alkalisiliconaten hydrophobieren effizient und können pulverförmig als Dry-Mix-Additive sowohl für neutrale als auch stark basische Baustoffe eingesetzt werden. Die festen Salze (P) basieren beispielsweise zu einem hohen Anteil auf dem kostengünstigen Methyltrichlorsilan und weisen dennoch eine hohe Wasserbenetzbarkeit und damit gute Einmischbarkeit in Baustoffe sowie eine exzellente Wirksamkeit und Permanenz selbst in stark alkalischen Baustoffen auf.

Gegenstand der Erfindung ist auch ein Verfahren zur Herstellung von festen Salzen (P) von Organosilanolen, von deren Hydrolyse/Kondensationsprodukten, oder von Organosilanolen zusammen mit deren Hydrolyse/Kondensations-produkten mit Alkali-Kationen,
bei dem in einem ersten Schritt Organosilane der allgemeinen Formel 1

$$(R^1)_a Si(Y)_b(-Si(R^2)_{3-c}(Y)_c)_d \qquad (1)$$

oder deren Hydrolyse/Kondensationsprodukte, oder die Organosilane der allgemeinen Formel 1 zusammen mit deren Hydrolyse/Kondensationsprodukten,
wobei

$R^1, R^2$     einen einwertigen Si-C gebundenen unsubstituierten oder durch Halogenatome, Aminogruppen, Thiolgruppen, $C_{1-6}$-Alkyl oder $C_{1-6}$-Alkoxygruppen substituierten Silylgruppen substituierten Kohlenwasserstoffrest mit 1 bis 30 Kohlenstoffatomen, in dem eine oder mehrere, einander nicht benachbarte $-CH_2$-Einheiten durch Gruppen -O-, -S-, oder - $NR^3$- ersetzt sein können und in denen eine oder mehrere, einander nicht benachbarte =CH-Einheiten durch Gruppen -N= ersetzt sein können,

$R^3$     Wasserstoff, einen einwertigen unsubstituierten oder durch Halogenatome oder $NH_2$-Gruppen substituierten Kohlenwasserstoffrest mit 1 bis 8 Kohlenstoffatomen,

$Y$     Wasserstoff, F, Cl, Br oder $OR^4$

$R^4$     einen einwertigen unsubstituierten oder durch Halogenatome oder Silylgruppen substituierten Kohlenwasserstoffrest mit 1 bis 10 Kohlenstoffatomen, in dem eine oder mehrere, einander nicht benachbarte $CH_2$-Einheiten durch Gruppen -O-, -S-, oder -$NR^3$- ersetzt sein können und in denen eine oder mehrere, einander nicht benachbarte =CH-Einheiten durch Gruppen -N= ersetzt sein können,

$a$     die Werte 1, 2 oder 3 und

$b, c, d$     die Werte 0, 1, 2 oder 3 bedeuten,

mit der Massgabe, dass $b+c \geq 1$ und $a+b+d = 4$,
in Gegenwart von Wasser und basischem Salz von Alkali-Kationen, hydrolysiert werden,
wobei die Menge an basischem Salz so bemessen ist, dass auf ein Mol Silicium 0,5 Mol bis 3 Mol Kationen kommen, und falls die Organoailane der allgemeinen-Formel 1 Reste ausgewählt aus F, Cl, Br aufweisen, pro Mol F, Cl und Br ein weiteres Mol an basischem Salz vorhanden ist und mindestens 1% und höchstens 99% der Reste $R^1$ und $R^2$ aus Methyl- und Ethylresten ausgewählt werden und die übrigen Reste $R^1$ und $R^2$ mindestens 4 C-Atome enthalten,
in einem zweiten Schritt die freigesetzte Verbindung HY als Gas entfernt wird,
in einem dritten Schritt in der Mischung vorhandenes Wasser entfernt wird und in einem vierten Schritt das Salz (P) als Feststoff isoliert wird,

Bei den festen Salzen (P) von Organosilanolen, sind die Organosilanole vorzugsweise die Umsetzungsprodukte der Organosilane der allgemeinen Formel 1. Die Alkali-Kationen und die Molverhältnisse sind vorzugsweise die im Herstellungverfahren bezeichneten Alkali-Kationen und die dort angegebenen Molverhältnisse.

Im erfindungsgemäßen Salz beträgt das bevorzugte Molverhältnis Kation zu Silicium mindestens 0,55, vorzugsweise mindestens 0,6, besonders bevorzugt mindestens 0,7, insbesondere bevorzugt mindestens 0,8 und höchstens 2,8, vorzugsweise höchstens 2,0, besonders bevorzugt höchstens 1,5, insbesondere höchstens 1,5 insbesondere bevorzugt höchstens 1,1. Vorzugsweise wird das Kation ausgewählt aus Natrium und Kalium.

Die einzelnen Schritte müssen bei dem erfindungsgemäßen Verfahren nicht zeitlich streng getrennt hintereinander ablaufen, sondern werden je nach Art der Einsatzstoffe so gestaltet, dass sie im Sinne einer möglichst maximalen Raum/Zeit-Ausbeute weitgehend parallel verlaufen oder zumindest nahtlos ineinander übergehen, gegebenenfalls auch in anderer Reihenfolge ablaufen.

Anstelle von monomeren Verbindungen der allgemeinen Formel 1 können auch deren Hydrolyse/Kondensationsprodukte, die z.B. durch Teilhydrolyse der einzelnen oder gemischten monomeren Verbindungen der allgemeinen Formel 1 oder durch Alkoholyse der entsprechenden Chlorsilanvorstufen mit feuchtem Alkohol gebildet werden, gegebenenfalls im Gemisch mit den jeweiligen Monomeren, eingesetzt werden.

Bei den Organosilanen der allgemeinen Formel 1 ist für eine rasche und vollständige Umsetzung ein gewisser Anteil an nicht hydrolysierten und/oder nicht kondensierten Monomeren bevorzugt, weshalb in der Gesamtmischung vorzugsweise mindestens 60%, besonders bevorzugt mindestens 80%, insbesondere mindestens 90% aller siliciumhaltigen Bestandteile monomer vorliegen. Tolerierbare Oligomerenanteile ergeben sich z.B. dann, wenn der im zweiten Schritt des erfindungsgemäßen Verfahrens abdestillierte Alkohol $HOR^4$ bereits gewisse Anteile Wasser enthält und zur Herstellung der Alkoxysilane wieder eingesetzt wird. Durch die Schaffung eines geschlossenen Stoffkreislaufs wird die Wirtschaftlichkeit des Gesamtprozesses deutlich erhöht.

Es können auch gemischte Oligomere aus Organosilanen der allgemeinen Formel 1 eingesetzt werden, oder Gemische dieser gemischten oligomeren Siloxane mit monomeren Silanen der allgemeinen Formel 1. Gegebenenfalls vorhandene, durch Hydrolyse gebildete Silanolgruppen in den Verbindungen der allgemeinen Formel 1 oder deren Oligomeren stören dabei nicht.

Vorzugsweise bedeutet höchstens bei 10 Mol-%, insbesondere bei höchstens 1 Mol-% der Verbindungen der allgemeinen Formel 1 **Y** Wasserstoff.

$R^1$, $R^2$ können linear, verzweigt, zyklisch, aromatisch, gesättigt oder ungesättigt sein. Beispiele für Aminogruppen in $R^1$, $R^2$ sind Reste $-NR^5R^6$, wobei $R^5$ und $R^6$ Wasserstoff, ein Rest $C_1$-$C_8$-Alkyl, Cycloalkyl-, Aryl, Arylalkyl, Alkylaryl sein können, welche substituiert sein können durch $-OR^7$, wobei $R^7$ $C_1$-$C_8$-Alkyl, Aryl, Arylalkyl, Alkylaryl sein kann. Falls $R^5$, $R^6$ Alkylreste sind, können darin einander nicht benachbarte $CH_2$-Einheiten durch Gruppen -O-, -S-, oder $-NR^3$- ersetzt sein. $R^5$ und $R^6$ können auch einen Cyclus darstellen. $R^5$ ist bevorzugt Wasserstoff oder ein Alkylrest mit 1 bis 6 Kohlenstoffatomen.

$R^1$, $R^2$ in der allgemeinen Formel 1 steht bevorzugt für einen einwertigen unsubstituierten oder durch Halogenatome, Amino-, Alkoxy- oder Silylgruppen substituierten Kohlenwasserstoffrest mit 1 bis 18 Kohlenstoffatomen. Besonders bevorzugt sind unsubstituierte Alkylreste, Cycloalkylreste, Alkylarylreste, Arylalkylreste und Phenylreste. Vorzugsweise weisen die Kohlenwasserstoffreste $R^1$, $R^2$ 1 bis 8 Kohlenstoffatome auf, Besonders bevorzugt sind der Methyl-, Ethyl-, n-Propyl-, 2-Propyl-(=Isopropyl-), 3,3,3-Trifluorpropyl-, Vinyl-, 1-n-Butyl-, 2-Methylpropyl- (= Isobutyl-), 1-n-Pentyl-, 1-n-Hexyl-, 1-n-Heptyl-, 1-n-Octyl-, 2,4,4-Trimethyl-1-pentyl-, 2-Ethyl-1-hexyl-, 2-Methyl-1-pentyl-, sowie die unter den Sammelbegriffen Isohexyl-, Isooctyl- subsummierten Reste und der Phenylrest, ganz besonders der Methyl-, der Ethyl-, der Propyl-, der Isobutyl-, der 1-n-Hexyl,- der 1-n-Octyl, der Isohexyl- und der Isooctylrest.

Weitere Beispiele für Reste $R^1$, $R^2$ sind:

3-Chlorpropyl-, Chlormethyl-, 2-(Trimethylsilyl)ethyl-, 2-(Trimethoxysilyl)-ethyl-, 2-(Triethoxysilyl)-ethyl-, 2-(Dimethoxymethylsilyl)-ethyl-, 2-(Diethoxymethylsilyl)-ethyl-, 2-Butyl-, t-Butyl-, n-Pentyl-, Cyclopentyl-, Cyclohexyl-, n-Nonyl-, n-Decyl-, n-Undecyl-, 10-Undecenyl-, n-Dodecyl-, Isotridecyl-, n-Tetradecyl-, n-Hexadecyl-, Allyl-, Benzyl-, *p*-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropyl-, 3-(2-Aminoethyl)aminopropyl-, 3-Aminopropyl-, N-Morpholinomethyl-, N-Pyrrolidinomethyl-, 3-(N-Cyclohexyl)aminopropyl-, 1-N-Imidazolidinopropylrest. Weitere Beispiele für $R^1$, $R^2$ sind Reste $-(CH_2O)_n$-$R^8$,- $(CH_2CH_2O)_m$-$R^9$, und $-(CH_2CH_2NH)_o$H, wobei n, m und o Werte von 1 bis 10, insbesondere 1, 2, 3 bedeuten und $R^8$, $R^9$ die Bedeutungen von $R^5$, $R^6$ aufweisen.

$R^3$ bedeutet vorzugsweise Wasserstoff oder einen unsubstituierten oder durch Halogenatome substituierten Alkylrest mit 1 bis 6 Kohlenstoffatomen. Beispiele für $R^3$, insbesondere für Alkylreste sind vorstehend für $R^1$ aufgeführt.

$R^4$ in der allgemeinen Formel 1 kann ethylenisch ungesättigte Doppelbindungen aufweisen oder gesättigt sein; Bevorzugt ist ein einwertiger, gegebenenfalls durch Alkoxygruppen mit 1 bis 3 Kohlenstoffatomen substituierter Alkylrest mit 1 bis 4 Kohlenstoffatomen, der linear oder verzweigt sein kann. Bevorzugt handelt es sich um lineare Alkylreste, ganz besonders bevorzugt sind der Methyl- und der Ethylrest, insbesondere der Methylrest.

Weitere Beispiele für Reste $R^4$ sind:

n-Propyl-, 2-Propyl-, n-Butyl-, 2-Butyl-, 2-Methylpropyl-, t-Butyl-, 2-(Methoxy)-ethyl-, 2-(Ethoxy)ethylrest, 1-Propen-2-ylrest.

Falls **d** = 0, dann wird der Anteil an Verbindungen der allgemeinen Formel 1, bei der **a** = 2 oder 3 bedeutet, gegebenenfalls deren Hydrolyse/Kondensationsprodukte oder deren Anteil in gemischten Hydrolyse/Kondensationsprodukte mit Verbindungen der allgemeinen Formel 1 bei der **a** = 1 bedeutet, vorzugsweise so bemessen, dass Feststoffe entstehen und beträgt vorzugsweise 0 bis 20 Mol-%, besonders bevorzugt 0 bis 10 Mol-%, insbesondere 0 Mol-% bezogen auf die Gesamtmenge an Silan der allgemeinen Formel 1 bzw. deren Hydrolyse/Kondensationsprodukte.

Vorzugsweise bedeutet **d** den Wert 0. Vorzugsweise bedeutet höchstens bei 20 Mol-%, insbesondere bei höchstens 5 Mol-% der Verbindungen der allgemeinen Formel 1 **d** einen Wert 1, 2 oder 3.

Beispiele für Verbindungen der allgemeinen Formel 1, bei der a = 1 bedeutet, sind:

$MeSi(OMe)_3$, $MeSi(OEt)_3$, $MeSi(OMe)_2(OEt)$, $MeSi(OMe)(OEt)_2$, $MeSi(OCH_2CH_2OCH_3)_3$, $H_3C$-$CH_2$-$CH_2$-$Si(OMe)_3$, $(H_3C)_2CH$-$Si(OMe)_3$, $CH_3CH_2CH_2CH_2$-$Si(OMe)_3$, $(H_3C$-$CH_2)CH(CH_3)$-$Si(OMe)_3$, $(H_3C)_2CHCH_2$-$Si(OMe)_3$, $tBu$-$Si(OMe)_3$, $PhSi(OMe)_3$, $PhSi(OEt)_3$, $F_3C$-$CH_2$-$CH_2$-$Si(OMe)_3$, $H_2C=CH$-$Si(OMe)_3$, $HS$-$CH_2CH_2CH_2$-$Si(OMe)_3$ $H_2C=CH$-$Si(OEt)_3$, $H_2C=CH$-$CH_2$-$Si(OMe)_3$, $Cl$-$CH_2CH_2CH_2$-$Si(OMe)_3$, cy-Hexyl-$Si(OEt)_3$, n-Hexyl-$Si(OMe)_3$, Isohexyl-$Si(OMe)_3$, cy-Hexyl-$CH_2$-$CH_2$-$Si(OMe)_3$, $H_2C=CH$-$(CH_2)_9$-$Si(OMe)_3$, $CH_3CH_2CH_2CH_2CH(CH_2CH_3)$-$CH_2$-$Si(OMe)_3$, Isooctyl-$Si(OMe)_3$, Isooctyl-$Si(OEt)_3$, n-Octyl-$Si(OMe)_3$, n-Octyl-$Si(OEt)_3$, Hexadecyl-$Si(OMe)_3$, $Cl$-$CH_2$-$Si(OMe)_3$, $H_2N$-$(CH_2)_3$-$Si(OEt)_3$, cyHex-$NH$-$(CH_2)_3$-$Si(OMe)_3$, $H_2N$-$(CH_2)_2$-$NH$-$(CH_2)_3$-$Si(OMe)_3$, $O(CH_2CH_2)_2N$-$CH_2$-$Si(OEt)_3$, $PhNH$-$CH_2$-$Si(OMe)_3$, Hexadecyl-$SiH_3$, Me-

$Si(OEt)_2H$, $PhSi(OEt)_2H$, $PhSi(OMe)_2H$, $MeSi(OEt)H_2$, Propyl-$Si(OMe)_2H$, $MeSiH_3$, $MeSi(OEt)(OMe)H$, $(MeO)_3SiCH_2CH_2$-Si $(OMe)_3$, $(EtO)_3Si$-$CH_2CH_2$-$Si(OEt)_3$, $Cl_3Si$-$CH_2CH_2$-$SiMeCl_2$, $Cl_3Si$-$CH_2CH_2$-$SiCl_3$, $Cl_3Si$-$(CH_2)_6$-$SiCl_3$, $(MeO)_3SiSi(OMe)_2Me$, $MeSi(OEt)_2Si(OEt)_3$, $MeSiCl_2SiCl_3$, $Cl_3SiSiCl_3$, $HSiCl_2SiCl_2H$, $HSiCl_2SiCl_3$, $MeSiCl_3$, $MeSiCl_2H$, $H_2C=CH$-$SiCl_3$, $PhSiCl_3$, $F_3C$-$CH_2$-$CH_2$-$SiCl_3$, $Cl$-$CH_2CH_2CH_2$-$SiCl_3$, MeSi $(OMe)$ $Cl_2$, $MeSi(OEt)ClH$, $EtSiBr_3$, $MeSiF_3$, $Cl$-$CH_2$-$SiCl_3$, $Cl_2CH$-$SiCl_3$.

Bevorzugt sind $MeSi(OMe)_3$, $MeSi(OEt)_3$, $(H_3C)_2CHCH_2$-$Si(OMe)_3$ und $PhSi(OMe)_3$, n-Hexyl-$Si(OMe)_3$, Isooctyl-$Si(OMe)_3$, n-Octyl-$Si(OMe)_3$, wobei Methyltrimethoxysilan, *n*-Hexyl-$Si(OMe)_3$, Isooctyl-$Si(OMe)_3$ und n-Octyl-$Si(OMe)_3$, bzw. deren reine oder gemischten Hydrolyse/Kondensationsprodukte besonders bevorzugt sind.

Beispiele für Verbindungen der allgemeinen Formel 1, bei der a = 2 bedeutet, sind:

$Me_2Si(OMe)_2$, $Me_2Si(OEt)_2$, $Me_2Si(OCH(CH_3)_2)_2$, $MeSi(OMe)_2CH_2CH_2CH_3$, $Et_2Si$ $(OMe)_2$, $Me_2Si$ $(OCH_2CH_2OCH_3)_2$, MeSi $(OMe)$ $_2Et$, $(H_3C)_2CH$-$Si(OMe)_2Me$, Ph-$Si(OMe)_2Me$, t-Bu-$Si(OMe)_2Me$, $Ph_2Si(OMe)_2$, $PhMeSi(OEt)_2$, $MeEtSi(OMe)_2$,

$F_3C$-$CH_2$-$CH_2$-$Si(OMe)_2Me$, $H_2C=CH$-$Si(OMe)_2Me$, $H_2C=CH$-$CH_2$-Si $(OMe)_2Me$, $Cl$-$CH_2CH_2CH_2$-$Si(OMe)_2Me$, cy-Hex-$Si(OMe)_2Me$, $HS$-$CH_2CH_2CH_2Si(OMe)_2Me$ cy-Hex-$CH_2$-$CH_2$-$Si(OMe)_2Me$, $H_2C=CH$-$(CH_2)_9$-$Si(OMe)_2Me$, $Cl$-$CH_2$-$SiMe(OMe)_2$, $H_2N$-$(CH_2)_3$-$SiMe(OEt)_2$, cyHex-NH-$(CH_2)_3$-$SiMe(OMe)_2$, n-Hexyl-$Si(OMe)_2Me$, Isohexyl-$Si(OMe)_2Me$, Isooctyl-$Si(OMe)_2Me$, Isooctyl-$Si(OEt)_2Me$, n-Octyl-$Si(OMe)_2Me$, n-Octyl-$Si(OEt)_2Me$, $H_2N$-$(CH_2)_2$-NH-$(CH_2)_3$-$SiMe(OMe)_2$, $O(CH_2CH_2)_2N$-$CH_2$-$SiMe(OMe)_2$, PhNH-$CH_2$-$SiMe(OMe)_2$, $(MeO)_2MeSi$-$CH_2CH_2$-$SiMe(OMe)_2$, $(EtO)_2MeSi$-$CH_2CH_2$-$SiMe(OEt)_2$, $Cl_2MeSi$-$CH_2CH_2$-$SiMeCl_2$, $Cl_2MeSi$-$CH_2$-$SiMeCl_2$, $(MeO)_2MeSiSi$ $(OMe)_2Me$, $MeSi(OEt)_2SiMe(OEt)_2$, $MeCl_2SiMeCl_2$, $HClMeSiSiMeClH$, $Me_2SiCl_2$, $Me_2SiClH$, $H_2C=CH$-$SiMeCl_2$, $Ph_2SiCl_2$, $MePhSiCl_2$, $F_3C$-$CH_2$-$CH_2$-$SiMeCl_2$, $Cl$-$CH_2CH_2CH_2$-$SiMeCl_2$, $Me_2Si(OMe)Cl$, $Me_2Si(OEt)H$, $EtSiMeBr_2$, $Me_2SiF_2$, $Cl$-$CH_2$-$SiMeCl_2$, $Cl_2CH$-$SiMeCl_2$. $Me_2Si(OEt)H$, $Me_2SiH_2$, $Et_2SiH_2$, $EtMeSiH_2$, $Ph_2SiH_2$,

$Me_2Si(OMe)Si(OMe)_3$, $Me_2Si(OMe)Si(OMe)Me_2$, Hexadecyl-$SiMeH_2$, $Me_2Si$ $(OMe)$ $SiMe_3$, $Me_2Si(OMe)$ $Si$-$Me(OMe)_2$.

Bevorzugt sind $Me_2Si(OMe)_2$, $Me_2Si(OEt)_2$, MeSi $(OMe)$ $_2CH_2CH_2CH_3$ und Ph-$Si(OMe)_2Me$, wobei $Me_2Si(OMe)_2$ und MeSi $(OMe)$ $_2CH_2CH_2CH_3$ besonders bevorzugt sind.

Me bedeutet Methylrest, Et bedeutet Ethylrest, Ph bedeutet Phenylrest, t-Bu bedeutet 2,2-Dimethylpropylrest, cy-Hexyl bedeutet Cyclohexylrest, die Präfix "Iso" (bspw. Isohexyl-, Isooctyl-) bedeutet ein verzweigter Rest (vorzugsweise handelt es sich bei den Silanen um Gemische mit mindestens einem verzweigte Rest, Isooctyl steht vorzugsweise für den 2,4,4-Trimethyl-1-pentyl-Rest), Hexadecyl- bedeutet n-Hexadecylrest.

Maßgeblich ist dabei, dass mindestens 1 %, vorzugsweise mindestens 10%, besonders bevorzugt mindestens 25% und höchstens 99%, vorzugsweise höchstens 90%, besonders bevorzugt höchstens 75% aller Reste $R^1$ in den Verbindungen der allgemeinen Formel 1 oder deren Hydrolyse/Kondensationsprodukte ausgewählt werden aus Methyl- und Ethylresten.

Die basischen Salze weisen vorzugsweise einen $pk_B$ Wert höchstens 12, besonders bevorzugt höchstens 10, insbesondere höchstens 5 auf. Als basische Salze werden Verbindungen eingesetzt, die in Wasser solvatisierte Hydroxidionen bilden und als Kationen Alkaliionen enthalten. Als Alkalisalze werden vorzugsweise die Alkalihydroxide, wie Lithiumhydroxid, Natriumhydroxid, Kaliumhydroxid und Cäsiumhydroxid eingesetzt, besonders bevorzugt Natriumhydroxid und Kaliumhydroxid. Weitere Beispiele für Alkalisalze sind Alkalicarbonate, wie Natriumcarbonat und Kaliumcarbonat sowie Alkalihydrogencarbonate wie Natriumhydrogencarbonat, Alkaliformiate wie Kaliumformiat, Alkalisilikate (Wasserglas) wie Natriumorthosilikat, Dinatriummetasilikat, Dinatriumdisilikat, Dinatriumtrisilikat oder Kaliumsilikat. Desweiteren können auch Alkalioxide, Alkaliamide oder Alkalialkoholate eingesetzt werden, vorzugsweise diejenigen, die den selben Alkohol freisetzen wie die eingesetzten Silane der allgemeinen Formel 1.

Es können auch Gemische verschiedener Salze gegebenenfalls unterschiedlicher Alkalimetalle eingesetzt werden, beispielsweise Mischungen aus Natriumhydroxid und Kaliumhydroxid. Typische Nebenbestandteile in technischen Qualitäten der basischen Salze (d.h. bei Reinheiten zwischen 80 und 99 Gew.-%) wie Wasser oder andere Salzanteile, z.B. Natriumanteile in Kaliumsalzen oder Carbonate in Hydroxiden, stören in der Regel nicht und können toleriert werden. Eine weitere bevorzugte Variante ist der Einsatz wässriger Zubereitungen von Alkalisiliconaten gegebenenfalls im Gemisch mit anderen Alkalisalzen vorzugsweise Alkalihydroxiden. Dies ist gegebenenfalls vorteilhaft, wenn die wässrige Siliconatzubereitung (Lösung, Suspension, Emulsion) z.B. als Verkaufsprodukt bereits in großen Mengen hergestellt wird (z.B. Kaliummethylsiliconat, das bei WACKER CHEMIE AG als SILRES® BS 16 käuflich erhältlich ist), sodass lediglich ein weiterer Reaktionsschritt benötigt wird, die erfindungsgemäßen festen Salze herzustellen.

Die Menge an basischem Salz wird vorzugsweise so gewählt, dass auf ein Mol Silicium mindestens 0,55, vorzugsweise mindestens 0,6, besonders bevorzugt mindestens 0,7, insbesondere bevorzugt mindestens 0,8 und höchstens 2,8, vorzugsweise höchstens 2,0, besonders bevorzugt höchstens 1,5, insbesondere bevorzugt höchstens 1,1 Kationen kommen.

Bei Anwesenheit von Resten ausgewählt aus F, Cl, Br in der allgemeinen Formel 1 wird die vorhandene Menge an F, Cl und Br mit der stöchiometrischen Menge an Base, vorzugsweise mit Alkalihydroxid umgesetzt. Die dabei entstehenden Neutralisationsprodukte können von dem Organosiliconat nicht oder nur mit hohem Aufwand abgetrennt werden und verbleiben deshalb vorzugsweise im erfindungsgemäßen festen Salz (P), sodass sich dessen Wirkstoffgehalt entsprechend verringert. Vorzugsweise bedeutet deshalb höchstens bei 50 Mol-%, insbesondere bei höchstens 20 Mol-%, besonders bevorzugt bei höchstens 5 Mol-% der Verbindungen der allgemeinen Formel 1 Y Fluor-, Chlor und/oder Brom.

Ein Vorteil des erfindungsgemäßen Verfahrens ist die enorme tolerierbare Variationsbreite der Einsatzstoffe und die damit einhergehenden relativ geringen Anforderungen an deren Reinheit. Das Verfahren ist deshalb sehr gut geeignet, auch Neben- und Abfallprodukte aus dem ganzen Silan/Siloxanverbund zu verwerten, beispielsweise Rückstände der Silandirektsynthese, teilalkoxylierte Chlorsilanmischungen, Nebenprodukte von Hydrosilylierungen, katalysatorhaltige Destillationsrückstände, Kondensate aus CVD-Prozessen u.v.m. Es können auch flüssige, feste oder gasförmige Verunreinigen oder Nebenprodukte vorhanden sein, die sofern sie nicht stören, im Produkt verbleiben können, z.B. Kieselsäure oder Metallsalze, wie Eisenchlorid, Eisenoxid, Aluminiumoxid oder platinhaltige Katalysatoren oder durch das Verfahren leicht abzutrennen sind, wie Lösungsmittel.

Die bevorzugt eingesetzte Wassermenge entspricht der für eine vollständige Hydrolyse der Reste Y benötigten Menge, gegebenenfalls vermindert um die vom eingesetzten basischen Salz abspaltbare HY Menge sowie um die Stoffmenge des im Alkalisalz gegebenenfalls gebundenen Wassers oder gegebenenfalls bei Kondensationsprozessen gebildeten Wassers. Obwohl chemisch keine Obergrenze für die Wassermenge existiert, wird man aus wirtschaftlichen Gründen den Wasseranteil möglichst niedrig halten, da überschüssiges Wasser wieder entfernt werden muss. Aufgrund der einfacheren Dosierung von Lösungen des basischen Salzes im Vergleich zu Feststoffen wird die gewünschte Menge an basischem Salz vorzugsweise gelöst in der benötigten Wassermenge eingesetzt. Ein Wasserüberschuss wird demnach z.B. dann sinnvoll und akzeptabel sein, wenn die geringe Löslichkeit des basischen Salzes in Wasser eine größere Wassermenge zur Herstellung einer gesättigten Lösung erfordert, als für die Hydrolyse bei dem erfindungsgemäßen Verfahren benötigt wird oder die Salzlösung in einer entsprechenden Konzentration technisch verfügbar ist. Ein Wasserüberschuss kann auch dazu dienen, die Hydrolysereaktion zu beschleunigen und/oder im erfindungsgemäßen festen Salz einen möglichen Restanteil nicht hydrolysierter Reste Y zu reduzieren, deren Hydrolyse bei der Lagerung oder der späteren Anwendung als Hydrophobiermittel zur verzögerten Freisetzung der entsprechenden Spaltprodukte (z.B. Methanol) führen kann.

Im Hinblick auf möglichst geringe Emissionen bei der Anwendung der erfindungsgemäßen festen Salze z.B. als Additive in Baustoffen wird vorzugsweise eine möglichst vollständige Hydrolyse der Reste Y angestrebt. Aufgrund ihrer hohen hydrophobierenden Wirksamkeit müssen jedoch nur vergleichsweise geringe Konzentrationen der erfindungsgemäßen festen Salze eingesetzt werden, sodass Restmengen hydrolysierbarer Reste Y emissionstechnisch i.d.R. nicht relevant sind und deren Beseitigung somit keinen erhöhten Aufwand rechtfertigt. Wenn dagegen - z.B. für bestimmte Anwendungen - ein besonderes hoher Restgehalt nicht hydrolysierter Reste Y erwünscht ist, kann dieser durch Verringerung der eingesetzten Wassermenge auf das gewünschte Maß eingestellt werden.

Eine Möglichkeit, den Wasseranteil zu verringern, ist die Zugabe des basischen Salzes bzw. Gemisches des basischen Salzes entweder pur als Feststoff oder als Lösung in einem organischen Lösungsmittel vorzugsweise in dem gleichen Alkohol, welcher gegebenenfalls bei der Hydrolysereaktion frei wird und die separate Dosierung der erforderlichen Mindestmenge an Wasser. Diese Variante bietet sich beim Einsatz von hydrolysierbaren Alkalialkoholaten oder Alkaliamiden als basisches Salz an. Es können aber auch Kombinationen von verschiedenen Lösungsmitteln zum Einsatz kommen wie z.B. Gemische aus Wasser und Alkohol.

Das im dritten Schritt in der Mischung vorhandene und gegebenenfalls dem Salz (P) anhaftende Wasser wird durch die Einsatzstoffe eingebracht und/oder wird während der Umsetzung gebildet.

Die im zweiten Schritt freigesetzte Verbindung HY kann während und/oder nach der Hydrolysereaktion aus dem Reaktionsgemisch als Gas bzw. Dampf entfernt werden.

Vorzugsweise werden die Verfahrensschritte 2 und 3 in Anwesenheit einer unter den Reaktionsbedingungen inerten **Flüssigkeit F** durchgeführt, deren Siedepunkt oberhalb dem der freigesetzten Verbindung HY liegt und in der das als Feststoff anfallende Siliconatsalz bei 100°C/ 1 bar zu höchstens 1 Gew.-% löslich ist.

Die inerte Flüssigkeit F greift unter Reaktionsbedingungen nicht in die Reaktion ein. Als inerte Flüssigkeit F eignen sich vorzugsweise Kohlenwasserstoffe, wie Alkane, Cycloalkane, Aromaten oder Alkylaromaten oder deren Gemische, sowie Ether. Bevorzugt werden Alkane und Alkangemische, Cycloalkane und Alkylaromaten eingesetzt, besonders bevorzugt Alkangemische. Vorteilhaft an Alkangemischen sind ihr günstiger Preis sowie ihre gute Verfügbarkeit in verschiedenen, definierten Siedebereichen. Es können auch Gemische verschiedener **Flüssigkeiten F** eingesetzt werden. Vorzugsweise liegt der Siedepunkt der inerten **Flüssigkeit F** bei 1013 hPa mindestens 10°C, besonders bevorzugt mindestens 30°C über dem Siedepunkt von HY.

Beispiele für **Flüssigkeiten F** sind:

n-Hexan, Cyclohexan, n-Heptan, Cycloheptan, n-Octan, Cyclooctan, n-Nonan, n-Decan, n-Dodecan, 2-Methylheptan, Methylcyclopentan, Methylcyclohexan, Isoparaffine wie Isopar® C, E, G, H, L, M von ExxonMobil, Benzol, Toluol, o-Xylol, m-Xylol, p-Xylol, Mesitylen, Ethylbenzol, Methyl-tert-butylether, Diethylether, Diphenylether, Phenylmethylether und Di-n-butylether.

Der Anteil der **Flüssigkeit F** an der Gesamtmischung wird dabei vorzugsweise so gewählt, dass eine gute Durchmischung der gebildeten Suspension gewährleistet ist und eine Verklebung der Feststoffpartikel vermieden wird. Er beträgt vorzugsweise mindestens 50 Gewichts-% besonders bevorzugt mindestens 100 Gewichts-% und vorzugsweise höchstens 500 Gewichts-% , insbesondere höchstens 300 Gewichts-% der erwarteten Menge an festen Salzen (P).

Vorzugsweise werden die Gemische aus Organosilanen der allgemeinen Formel 1 und/oder deren Hydrolyse/Kondensationsprodukte vorgelegt, basisches Salz und Wasser, vorzugsweise als wässrige Lösung, zudosiert. Sofern Y teilweise oder vollständig die Bedeutung F, Cl, Br hat, kann es günstiger sein, basisches Salz und Wasser vorzulegen. Zum Lösen der Reaktionspartner oder zur Verringerung der Viskosität kann es vorteilhaft sein, ein Lösungsmittel zuzugeben. Vorzugsweise wird dafür der Alkohol HOR$^4$ zugesetzt, der im Reaktionsgemisch bei der Hydrolyse sowieso gegebenenfalls gebildet wird und/oder die inerte **Flüssigkeit F**. Die Umsetzung erfolgt üblicherweise bei einer Temperatur von 0°C bis 150°C und unter dem Druck der umgebenden Atmosphäre. Das Verfahren kann aber auch bei einem niedrigeren oder höheren Druck durchgeführt werden. Die bei der Hydrolyse freigesetzte Reaktionswärme lässt sich nutzen, um die Reaktionsmischung aufzuheizen. Die Dosierdauer richtet sich deshalb in erster Linie nach der Wärmeleistung durch die Reaktion bzw. der Kühlleistung des Reaktors. Üblicherweise reicht die Wärmeleistung nicht aus, Gemische zum Sieden zu bringen und gegebenenfalls freigesetzten Alkohol komplett abzudestillieren. Man erhitzt deshalb vorzugsweise bereits während der Dosierung oder nach beendeter Dosierung zum Sieden und destilliert den freiwerdenden Alkohol ab. Um eine möglichst hohe Raum/Zeit-Ausbeute zu erzielen, wird die inerte **Flüssigkeit F** dabei vorzugsweise so zudosiert, dass der Füllgrad des Reaktionsgefäßes konstant bleibt, d.h. nur das abdestillierte Alkoholvolumen durch die **Flüssigkeit F** ersetzt wird. Ist die **Flüssigkeit F** mit dem freiwerdenden Alkohol nicht mischbar und spezifisch leichter als der Alkohol, kann dies beispielsweise mit einem Flüssigkeitsabscheider einfach automatisiert werden, der vor dem Auffangen des Alkoholdestillats mit der inerten **Flüssigkeit F** befüllt wird. Dabei läuft genau so viel **Flüssigkeit F** in das Reaktionsgefäß zurück wie Alkohol abdestilliert wird. Wenn die Reaktion beendet ist, kann der Alkohol über das Bodenventil des Abscheiders entnommen und z.B. zur Herstellung der Silane der allgemeinen Formel 1 wiederverwendet werden. Bei dieser Vorgehensweise lässt sich der Fortschritt der Hydrolysereaktion einfach durch Bestimmung der Alkoholmenge im Abscheider z..B. durch Volumen- oder Gewichtsmessung verfolgen und der Endpunkt feststellen. Nach Abdestillieren des Alkohols wird die Mischung vorzugsweise soweit aufgeheizt, dass Reste an Alkohol und Wasser sowie eventuell bei Kondensationsprozessen gebildetes Wasser ausgeschleppt werden, während das Siliconat als Feststoff ausfällt. Besonders bevorzugt wird bis zum Siedepunkt der **inerten Flüssigkeit F** aufgeheizt. Bei Einsatz eines Flüssigkeitsabscheiders sammelt sich das Wasser als untere Phase im Destillat der **Flüssigkeit F**, sodass sich der Trocknungsprozess ebenfalls einfach durch Kontrolle der abgeschiedenen Wassermenge verfolgen lässt.

Löst sich der freigesetzte Alkohol in der **inerten Flüssigkeit F**, destilliert man vorzugsweise ohne Flüssigkeitsabscheider bis. zum Siedepunkt der höhersiedenden **Flüssigkeit F**. Gegebenenfalls wird fraktionierend über eine Destillationskolonne mit entsprechender Trennleistung destilliert, um Alkohol, **Flüssigkeit F** und gegebenenfalls Wasser destillativ voneinander abzutrennen. Dabei erhält man als Destillate üblicherweise Gemische aus Alkohol, **Flüssigkeit F** und gegebenenfalls Wasser die entweder separat aufgereinigt oder direkt wieder zur Herstellung der Ausgangsverbindungen eingesetzt werden können. Bei dieser Prozessvariante wird vorzugsweise während der Destillation jeweils so viel frische **Flüssigkeit F** nachdosiert, dass die Reaktionsmischung rührbar bleibt.

Sofern in der Reaktionsmischung kein Alkohol vorhanden ist oder kein Alkohol freigesetzt wird, d.h. wenn Y = Wasserstoff, F, Cl und/oder Br, bilden sich als Spaltprodukte Gase, nämlich Wasserstoff, HF, HCl, HBr und/oder schwerflüchtige, im Produkt verbleibende Salze, sodass unmittelbar nach beendeter Reaktion die inerte Flüssigkeit abgetrennt werden kann. Das vorstehend beschriebene Verfahren kann im Batchbetrieb oder kontinuierlich gestaltet werden.

Bei einer weiteren bevorzugten Verfahrensvariante, die sich besonders für eine kontinuierliche Fahrweise eignet, wird zunächst durch Umsetzung der Gemische aus Organosilanen der allgemeinen **Formel 1** (oder deren Hydrolyse/ Kondensationsprodukte, oder der Organosilane der allgemeinen **Formel 1** zusammen mit deren Hydrolyse/Kondensationsprodukten) mit basischem Salz in Gegenwart von Wasser (Hydrolyse) eine Lösung des Siliconat-Salzes hergestellt (beispielsweise kontinuierlich nach dem in EP 650968 beschriebenen Verfahren, vorzugsweise unter Einsatz der mindestens für eine Hydrolyse der Reste Y notwendigen Menge Wasser und ohne vollständiges Abdestillieren des ggf. freigesetzten Alkohols). Dies erfolgt bevorzugt in Abwesenheit der inerten **Flüssigkeit F**. Im gleichzeitig durchgeführten zweiten und dritten Schritt wird die dabei gebildete Siliconatsalz-Lösung mit der inerten **Flüssigkeit F** unter Bedingungen in Kontakt gebracht, bei denen die flüchtigen Bestandteile der Lösung verdampfen und das Siliconatsalz als Feststoff ausfällt. Vorzugsweise wird die gebildete Siliconatsalz-Lösung, die neben dem Siliconatsalz weitere Hydrolyseprodukte wie Alkohol oder Fluorid, Chlorid oder Bromid des basischen Salzes und gegebenenfalls überschüssiges Wasser enthält, mit der **Flüssigkeit F** vermischt. Beim Ausdestillieren der flüchtigen Bestandteile fällt das feste Siliconatsalz als Suspension in der **Flüssigkeit F** an, und kann im vierten Schritt beispielsweise durch Filtration, Zentrifugation, Sedimentation oder Abdampfen der inerten **Flüssigkeit F** isoliert werden. Vorzugsweise wird dabei die inerte **Flüssigkeit F** vorgelegt und die Lösung des Siliconatsalzes unter Bedingungen zudosiert, die ein sofortiges Verdampfen der flüchtigen Bestandteile gewährleisten. Die im jeweiligen Fall optimalen Bedingungen lassen sich vom Fachmann durch Variation der Menge an **Flüssigkeit F**, Temperatur, Druck und/oder Dosiergeschwindigkeit einfach ermitteln. Wird die Lösung des Siliconatsalzes fein zerteilt z.B. über eine Düse mit der inerten **Flüssigkeit F** in Kontakt gebracht, so kann der Verdampfungsvorgang beschleunigt werden. Dabei wird die Siliconat-Lösung vorzugsweise direkt unter Spiegel in die **Flüssigkeit F** eingeleitet. Zur Beschleunigung des Verdampfungsvorgangs kann auch ein Teil der flüchtigen Bestandteile der zudosierten Siliconat-Salzlösung in einem vorgelagerten Schritt abdestilliert oder abgezogen werden, wobei es sich aus wirtschaftlichen Gründen empfiehlt, bei der Hydrolyse nur die für eine vollständige Reaktion notwendige Menge Wasser zuzusetzen. Die unmittelbar beim Eindosieren gebildeten Siliconatsalz-Partikel können als Suspension aus dem Reaktionsgefäß kontinuierlich ausgeschleust und einer gegebenenfalls kontinuierlichen Feststoffisolierung zugeführt werden. Die **Flüssigkeit F** lässt sich dabei fast vollständig zurückgewinnen und wieder in den Prozess einsetzen. Dadurch können Apparategrößen und Mengen an vorzuhaltender **Flüssigkeit F** (Hold Up) trotz entsprechend hoher Durchsatzraten gering gehalten werden. Ein weiterer positiver Effekt dieser Verfahrensvariante ist die kurze Verweilzeit der Siliconat-Lösung unter Destillationsbedingungen (vorzugsweise oberhalb Raumtemperatur), sodass selbst thermisch instabile Siliconat-Lösungen vollständig und ohne Zersetzungserscheinungen in Suspensionen überführt werden können, die in der Regel eine höhere thermische Stabilität aufweisen. Ein weiterer Vorteil besteht darin, dass über die Temperatur der **Flüssigkeit F** während der Dosierung der Siliconatsalz-Lösung die Korngrößenverteilung der gebildeten Siliconatsalz-Partikel beeinflusst werden kann. Im Regelfall führen niedrigere Temperaturen dabei zu einer größeren mittleren Korngröße.

Es ist ein Vorteil des erfindungsgemäßen Verfahrens, dass sich feste bis pastöse Anhaftungen an den Mischaggregaten und der Reaktorwand bei diesem Prozess mit fortschreitendem Trocknungsgrad ablösen und sich eine feinteilige Suspension ausbildet, aus der das erfindungsgemäße feste Salz (P) durch einfache Feststoffabtrennung wie Filtration, Sedimentation oder Zentrifugieren isoliert werden kann. In einer bevorzugten Variante werden die flüchtigen Bestandteile der feinteiligen Suspension bei dem Druck der umgebenden Atmosphäre oder unter vermindertem Druck abdestilliert und das anfallende feste Salz getrocknet. Dies geschieht vorzugsweise bei Temperaturen unterhalb der individuell (z.B. mit einer DSC-Messung) zu ermittelnden Zersetzungstemperatur der Suspension bzw. des getrockneten Feststoffs also üblicherweise bei Temperaturen unter 120°C, bevorzugt unter 100°C, besonders bevorzugt unter 80°C. Durch diese schonende Trocknung werden Überhitzungen und dadurch ausgelöste unkontrollierbare Zersetzungsreaktionen vermieden. Die bei der Feststoffisolierung abgetrennte **Flüssigkeit F** kann zum Spülen der Anlage verwendet werden, um letzte Feststoffreste auszuschwemmen und die Ausbeute zu erhöhen. Der insbesondere über Filtration, Sedimentation oder Zentrifugieren isolierte Feststoff kann mittels Durchleiten von gegebenenfalls erwärmtem Inertgas, oder in einem Trockenschrank oder beheizten Mischer gegebenenfalls unter vermindertem Druck - vorzugsweise bis zur Gewichtskonstanz - nachgetrocknet werden.

Das Verfahren kann im Batchbetrieb z.B. unter Verwendung eines Rührkessels oder Schaufeltrockners mit Destillationsaufsatz, wie er in Vielzweckanlagen üblich ist, durchgeführt werden. Aufgrund der geringen Belagbildung ist es bei Kampagnen üblicherweise nicht notwendig, den Reaktor zwischen den einzelnen Ansätzen von Feststoffresten zu reinigen. Das Verfahren lässt sich deshalb prinzipiell auch in Apparaten ohne aktive Mischung umsetzen.

Ein kontinuierliches Verfahren in einem Rohrreaktor oder einem Misch/Förderaggregat wie einem Kneter oder einem Einschnecken- oder Doppelschneckenextruder oder einem liegenden Schaufeltrockner - vorzugsweise mit mehreren Kammern für die verschiedenen Verfahrensschritte - ist ebenfalls möglich und für die großtechnische Produktion vorteilhaft.

Während bei den vorstehend beschriebenen Verfahrensvarianten die Schritte 2 und 3 in Anwesenheit einer inerten Flüssigkeit F durchgeführt werden, kann dabei als Wärmeüberträger auch ein entsprechend temperiertes Gas dienen, in das die Siliconat-Salz-Lösung aus Schritt 1 versprüht wird, oder die aufgeheizte Siliconat-Lösung wird unter Druck gesetzt und über eine Düse entspannt (Sprühtrocknung, Flash-Verdampfung). Gas und Siliconat-Lösung können dabei über eine Zweistoffdüse miteinander in Kontakt gebracht werden. Die Trocknung kann unter dem Druck der umgebenden Atmosphäre oder höherem oder niedrigerem Druck erfolgen. Als Gase dienen dabei Luft, wegen der möglichen Zündgefahr aus Sicherheitsgründen vorzugsweise jedoch inerte Gase wie Stickstoff, Magerluft (mit maximal 2 Vol.-% Sauerstoff), Argon oder Helium. Es können aber auch niedrigsiedende ggf. halogensubstituierte Kohlenwasserstoffe wie Methan, Ethan, Propan, Butan, Isobuten, Propen, Ethen oder Tetrafluormethan, Trifluormethan, Difluormethan und Fluormethan sowie Gemische verschiedener Gase eingesetzt werden. Die Wärmeübertragung auf Gas und/oder Siliconat-Salz-Lösung kann dabei sowohl mittels Wärmeträgermedien (Öle, Wasser, überspannter Wasserdampf), elektrischer Widerstandsheizung oder Mikrowellenstrahlung erfolgen.

Auch die direkte Trocknung der Siliconat-Salz-Lösung aus Schritt 1 mit einem entsprechenden Trockner stellt eine Option dar, sofern die während der Trocknung (Schritte 2 und 3) sich gegebenenfalls bildenden Anhaftungen mechanisch abgelöst werden können (z.B. in einem Schaufeltrockner, Schneckentrockner, Extruder oder Kurzweg- oder Dünnschichtverdampfer). Die Entfernung der flüchtigen Bestandteile kann bei dem Druck der umgebenden Atmosphäre oder unter vermindertem Druck stattfinden. Dies geschieht vorzugsweise bei Temperaturen unterhalb der individuell (z.B. mit einer DSC-Messung) zu ermittelnden Zersetzungstemperatur der Suspension bzw. des getrockneten Feststoffs also üblicherweise bei Temperaturen unter 120°C, bevorzugt unter 100°C, besonders bevorzugt unter 80°C. Durch diese schonende Trocknung werden Überhitzungen und dadurch ausgelöste unkontrollierbare Zersetzungsreaktionen vermieden. Die Temperierung erfolgt dabei vorzugsweise über elektrische Widerstandsheizung, Wärmeträgermedien (Öle, Wasser, überspannter Wasserdampf) oder durch Mikrowelleneinstrahlung.

Ein Vorteil des erfindungsgemäßen Verfahrens ist, dass die Salze (P) in der Regel als gut handhabbares Schüttgut anfallen. Wenn besonders einheitliche oder geringe Korngrößen erwünscht sind, z.B. um die Fließfähigkeit des erfindungsgemäßen Salzes (P) zu verbessern oder eine bessere Verteilung im Baustoff zu gewährleisten, kann es jedoch vorteilhaft sein, den nach Schritt 4 isolierten Feststoff in einem zusätzlichen Schritt mechanisch (z.B. durch Mahlung in einem Kollergang oder einer Kugelmühle) zu zerkleinern und ggf. über Siebe oder Windsichtung zu klassieren. Falls eine gröbere Körnung gewünscht wird, kann der Feststoff mit gängigen Methoden z.B. mittels Presswerkzeugen oder durch Zusatz einer Flüssigkeit wie beispielsweise Wasser in ein Material mit größerer Körnung (Granulat, Pellets, Tabletten, Dragees) überführt werden. Auch durch Zusatz einer Rieselhilfe oder eines Antibackmittels beispielsweise auf fester Basis von pyrogener oder gefällter Kieselsäure, Tonen, Kreide, Gips, Zement, Talk, Kalk oder organischen Polymeren, oder auf flüssiger Basis von Siliconölen, Mineralölen, Polyglycolen kann ebenfalls die Rieselfähigkeit in der jeweils gewünschten Art und Weise beeinflusst werden. Dies kann z.B. unter Mischen mit einem weiteren in der Endanwendung nützlichen Additiv in einem separaten Schritt erfolgen.

Die erfindungsgemäßen festen Salze (P) sind sehr gut geeignet für die Anwendung als Hydrophobiermittel, insbesondere für mineralische Substrate, Baustoffe und Fasern, insbesondere Naturfasern, wie Cellulose und Wolle und synthetische Fasern. Die Hydrophobierung von verarbeiteten Fasern, wie Textilien, Papier und Karton ist ebenfalls sehr gut möglich.

Unter den mineralischen Baustoffen sind auf Zement und Gips basierende hydraulisch abbindende Baustoffe bevorzugt, welche vorzugsweise mindestens 10 Gew-%, insbesondere mindestens 20 Gew-% Gips und/oder Zement enthalten. Unter den Gipsen sind sogenannte reaktive Gipse bevorzugt: Calciumsulfat-Halbhydrat oder -Hemihydrat ($CaSO_4 * 0{,}5 \ H_2O$), in Form von beispielsweise Baugips, Stuckgips, Modellgips oder Isoliergips (engl. stucco oder plaster of paris), und Anhydrite ($CaSO_4$, Anhydrit I, II und III), wie sie aus bekannten Calcinierverfahren, ausgehend von natürlichem Gipsstein oder künstlichen Gipsen, erhalten werden. Bei den Calcinierverfahren können die Phasen Calciumsulfat-Dihydrat, Calciumsulfat-Halbhydrat und Anhydrit I, II und III in ihren verschiedenen Formen in unterschiedlichen Verhältnissen und Mischungen anfallen. Auch andere Gipsarten, wie Estrichgips, Marmorgips, Anhydrit, Recyclinggips und künstliche Gipse (bei der Rauchgasentschwefelung, der Herstellung von Phosphor- und Flusssäure oder von organischen Carbonsäuren anfallend) sind gut geeignet. Je nach Zielanwendung (z.B. Gipskartonplatte, Gipswandbauplatte, Gipsfaserplatte, Gipsputz, Spachtelmasse, Estrichgips, Gipskleber etc.) und Abbauregion oder Quelle werden Gipse verschiedener Zusammensetzung als Rohstoffe eingesetzt, oft wird jedoch nur von einem Baustoff auf Gipsbasis gesprochen. Der Gips kann Zusätze enthalten, die die Herstellung von Gipsformkörpern oder Gipsprodukten erleichtern oder die Eigenschaften der Gipsformkörper und Gipsprodukte verbessern. Zusätze sind beispielsweise Füllstoffe, wie Siliciumdioxid, Calciumcarbonat und Fasern, Beschleuniger, wie Calciumsulfat-Dihydrat, Kaliumsulfat oder Aluminiumsulfat, Verzögerer, wie Eiweisse oder Weinsäure- oder Citronensäuresalze, Plastifizierungs- und Wasserreduktionsmittel für den Gipsbrei, wie Methylcellulosen oder anders derivatisierte Cellulosen, auf Polyvinylalkohol, Polyvinylacetat oder deren Derivaten basierende Dispersionspulver,wie Melamin-, Naphthalin- oder Ligninsulfonate, Polyphosphate oder Polycarboxylate, Haftvermittler für Karton, wie Stärken, Haftvermittler für Putze und Spachtelmassen, wie redispergierbare Pölymerpulver, pH-Wert-verändernde Additive, wie z.B. hydratisierter Kalk oder Zemente.

Die Hydrophobierung von Baustoffpulvern ist bevorzugt. Insbesondere werden die erfindungsgemäßen Feststoffe als Dry-Mix-Hydrophobiermittel eingesetzt.

Die erfindungsgemäßen Salze sind zunächst wasserbenetzbar (hydrophil) und führen zu einer sehr guten und unbeeinträchtigten Anmischbarkeit des Baustoffpulvers. Sie entwickeln dann schnell eine Hydrophobie in der Zeit, die der Baustoff wie z.B. ein Gips- oder Zementputz, eine Gipsspachtelmasse oder ein gips- oder zementbasierter Kleber zum Abbinden braucht und weisen somit eine ausgezeichnete Balance zwischen Hydrophilie und Hydrophobie auf. Dabei entwickeln sie bei ihrem Wirkmechanismus keine flüchtigen organischen Verbindungen (VOC). Dadurch und durch die Tatsache, dass sie keine bewusst zugesetzten Trägermaterialien enthalten, zählen sie zu den effizientesten verfügbaren Dry-Mix-Hydrophobiermitteln.

Es spielt dabei für die hydrophobierende Wirkung keine Rolle, welchen pH-Wert der betreffende Baustoff hat. Es können sowohl Baustoff-Mischungen mit einem neutralen pH-Wert von 7 als auch Baustoff-Mischungen mit einem sauren pH-Wert von 3 bis 7 als auch Baustoff-Mischungen mit einem alkalischen pH-Wert von 7 bis 13 eingesetzt werden.

Pulverförmige Baustoffe, enthaltend die festen Salze (P) sind ebenfalls Gegenstand der Erfindung.

Die Salze (P) eignen sich nicht nur als Dry-Mix-Hydrophobieradditive, sie eignen sich ebenfalls zur Hydrophobierung von anderen insbesondere gipsbasierten Baustoffen aus industrieller Fertigung, in denen bislang flüssige Hydrophobiermittel verwendet werden. Dazu zählen ganz besonders Gipsfaserplatten, bei denen dem Gipspulver bzw. Gipsbrei zur mechanischen Verstärkung anorganische oder organische Fasern zugesetzt werden, und Gipsblöcke oder Wandbauplatten, die im Trockenbau ähnlich wie Ziegel mittels Gipsklebemörteln zu massiven Wänden verklebt werden.

Die erfindungsgemäßen festen Salze (P) eignen sich für die Hydrophobierung von Gipskartonplatten. Die Einschränkung durch den relativ niedrigen Wirkstoffgehalt von käuflichen Siliconatlösungen z.B. verglichen mit Siliconölen auf Polymethylhydrogensiloxan-Basis, (z.B. SILRES® BS 94 von Wacker Chemie AG), die einen Wirkstoffgehalt von rund 100 % haben, vor allem für die Herstellung der Gipskartonplatte, aber auch für die Herstellung der Gipsfaserplatte oder der. Gipswandbauplatte, kann durch den Einsatz der festen Salze (P) aufgehoben werden. 40-60 % von handelsüblichen Siliconatlösungen bestehen produktionsbedingt aus Wasser, was bei den festen Salzen (P) nicht der Fall ist. Sie bestehen vorzugsweise (d.h. im Fall Y ≠ F, Cl, Br) vollständig aus Wirkstoff und enthalten kein Wasser. Dennoch neigen sie im Gegensatz zu den üblichen organischen Hydrophobierpulvern nicht zu Staubexplosionen, was für die sichere Handhabung z.B. bei der Dry-Mix-Herstellung an Luft einen weiteren wesentlichen Vorteil darstellt. Um in noch pH-Wert-sensitiveren Anwendungen sowie bei der Herstellung der Gipskartonplatte den Anstieg des pH-Wertes nach Zugabe des Alkalimetall-Methylsiliconatpulvers noch weiter zu dämpfen, besteht die Möglichkeit, den festen Salze (P) saure pH-Wertreduzierende oder puffernde Zusätze in fester Form zuzusetzen, die erst bei Wasserzugabe in der Anwendung aktiv werden. Dieser Ansatz ist bei flüssigen Alkalimetall-Methylsiliconatlösungen nicht denkbar, da es in wässriger Lösung noch vor der Anwendung spontan zur Neutralisationsreaktion käme und das Alkalimetall-Methylsiliconat destabilisiert und deaktiviert würde. Derartige saure Zusätze können alle in fester Form isolierbaren oder in hydrolysierbaren bzw. wasserlöslichen Hüllsubstanzen wie Polyvinylalkohol, Gelatine oder Polysacchariden (z.B. Cyclodextrinen) verkapselten und in Gegenwart von Wasser sauer reagierenden oder puffernden Stoffe sein, wie z.B. Hydrogensulfate, Schwefelsäureester, Phosphate, Hydrogenphosphate, Dihydrogenphosphate, Phosphorsäure- und Phosphorigsäureester, Eisensalze wie Eisenchlorid, Aluminiumsalze wie Aluminiumsulfat oder Aluminiumnitrat, saure Tonerden, Zeolithe, Kieselgele, Ionenaustauscher, langkettige ein- oder mehrprotonige Carbonsäuren sowie ihre Alkyl- oder Silylester oder ihre Anhydride, Ammoniumsalze oder Phosphoniumsalze, sauer reagierende organische Verbindungen wie Vitamin C (Ascorbinsäure), Phenole, Alginsäure oder Sulfonsäuren und ihre Ester, Amidosulfonsäuren, Taurin, Aminocarbonsäuren wie Glycin, Glutaminsäure oder Cystein, Phosphonsäuren und ihre Ester, Aminophosphonsäuren, Sulfinsäuren und ihre Ester, Polyacryl- und -methacrylsäuren, Lactone oder Sultone.

Die Salze (P) können auch in Kombination mit anderen gängigen Hydrophobieradditiven eingesetzt werden. Beispielsweise verstärken sie den hydrophobierenden Effekt von Siliconölen auf Polymethylhydrogensiloxan-Basis (z.B. SILRES® BS 94 von Wacker Chemie AG) im Bandstraßengips.

Ebenfalls lassen sich Stuckgipspulver wasserabweisend mit den Salzen (P) ausrüsten, um Statuen, Figuren, Ornamente, Spezialbauteile, Abformungen und andere gipsbasierte Sonderanfertigen in häuslichen oder anderen Bereichen resistent gegen jeglichen Wassereinfluss zu machen.

Die Salze (P) sind ebenfalls geeignet zur Hydrophobierung von Baustoffen aus anderen hydraulisch abbindenden Bindemitteln, wie Zementen (Portland-, Aluminat-, Hütten-, Magnesia-, Phosphatzement, Zementen mit puzzolanischen Zusätzen wie z.B. Flugaschen, Trass, Ziegelmehl, Metakaloin, Diatomite oder Geopolymere), Wasserglas oder Kalk. Damit können die erfindungsgemäßen Salze unter anderem Anwendung in Mauer- und Klebemörteln, Grund- und Dekorputzen, Fliesenklebern, Fugenmörteln, Klebe- und Armierungsmörtel für WDVS-Systeme, Pulverfarben, zement-tären Dichtungsschlämmen, Spachtelmassen, selbstverlaufende Bodenausgleichsmassen und Estriche sowie Flick- und Reparaturmörteln finden. Außerdem können sie Mischungen zur Herstellung von Betonfertigbauteilen und Betonwaren, wie Fassadenelementen, Fahrstreifenbegrenzern, Zaunelementen, Bodenplatten, zementgebundenen Kunststeinen, Randsteinen, Tischplatten, Zementfaserplatten, Dachschindeln und Betondachsteinen, Betonwannen oder Figuren zugesetzt werden, um diese hydrophob auszurüsten und damit z.B. gegen das Eindringen von Schadstoffen oder Frost/Tauzyclen beständig zu machen.

Für die wasserabweisende Imprägnierung von neutralen bis leicht alkalischen Baustoffen, insbesondere Produkten aus gebranntem Ton oder Naturstein, werden derzeit verdünnte Lösungen von Alkalimetall-Alkylsiliconaten eingesetzt. Dabei wird eine stark verdünnte wässrige Lösung aus einem wasser-enthaltenden Konzentrat (z.B. SILRES® BS 16 von Wacker Chemie AG) hergestellt, und in einem Produktionswerk für die werksseitige Anwendung oder von einem Formulierer für die Fassadenbehandlung, Herstellung von Grundierungen oder die Do-It-Yourself-Anwendung mit Wasser verdünnt. Die wasserlöslichen unter den Salzen (P) bieten hier den Vorteil, dass statt des wasser-enthaltenden Konzentrats ein 100-prozentiges Pulver zum Verarbeiter geliefert werden kann, das dann ebenfalls durch Auflösen in Wasser auf den gewünschten Verdünnungsgrad der Lösung eingestellt werden kann. So können Transport- und Lagerhaltungskosten deutlich gesenkt werden.

Dieser Vorteil ergibt sich ebenfalls für die Anwendung von Alkalimetall-Alkylsiliconaten für die Bohrlochinjektion zur Mauerwerkstrockenlegung, bei der durch die Injektion von Hydrophobiermitteln mit und ohne Druck in bestehendes Mauerwerk horizontale Sperren gegen aufsteigende Feuchte erreicht werden. Alkalimetall-Alkylsiliconate werden ebenfalls als Additive in Siliconharzfarben verwendet. Sie wirken hydrophobierend, erhöhen die Scheuerfestigkeit und können gleichzeitig zur pH-Wert-Einstellung eingesetzt werden. Auch hier kommen wässrige Verdünnungen der Alkalimetall-Alkylsiliconate zum Einsatz, die ebenfalls aus wasserlöslichen, hochkonzentrierten Salzen (P) hergestellt werden können. Auch hier können durch den Verzicht auf Wasser im Konzentrat Transport- und Lagerhaltungskosten deutlich gesenkt werden. Ebenfalls können die Alkalimetall-Alkylsiliconate der Farbformulierung als Feststoff zugesetzt werden.

Zusätzlich zu den bereits beschriebenen Anwendungen können die Salze (P) z.B. für hydrophobierende Eigenschaften in den folgenden Anwendungen verwendet werden: Hydrophobierung von Harnstoff-Formaldehyd-Harzen, Grundierungen auf der Basis von Styrolacrylaten, Herstellung von Acrylfarben, Flüssigkeiten zur Erzeugung einer Isolierschicht aus kondensiertem Silicat/Siliconat für Halbleiter, Hydrophobierung von Partikeln (z.B. Peroxide, Percarbonate, Farbpigmente, Silicate und Schichtsilikate, Düngemittelmischungen), Stabilisierung von Cellulosen oder Stärken gegen Feuchtigkeit, in Kombination mit Phosphaten zur Verbesserung der Feuchte-, Pilz- und Feuerbeständigkeit von damit imprägniertem Holz, Additivierung von Bohrlochspülflüssigkeiten (z.B. nebst Graphit) zur Verringerung von Bohrflüssigkeitsverlust an Bohrlöchern in ausgelaugtem Sand (die hydrophobe Beschichtung von Partikeln verbessert die Abreinigung von Bohrlöchern indem sie Anhaftungen der Spülflüssigkeit an den Partikeln verhindert), Hydrophobierung von feuerbeständigen Schäumen, Platten oder Feuerlöschpulvern, Antigraffiti-Coatings, Additive für injizierbare Mörtel und Zemente, Absorber für Säuren und/oder wässrige biologische oder organische Medien, in Kombination mit Alkalisilikaten zur Bodenverfestigung und -Hydrophobierung wie beispielweise beschrieben in EP 992 565, Hydrophobierädditiv für Deponieabfälle zur Verhinderung von umweltschädlichen Auswaschungen/Extrakten, säureneutralisierender und gegebenenfalls verstärkender Füllstoff für Elastomere, Additive in Kombination mit SiH-Verbindungen oder Aluminiumpulvern für gips- oder zementbasierte Schäume (z.B. Porenbeton), Instant-Mischung zur hydrophoben/antimikrobiellen Ausstattung von Textilien, Pflanzensamen, Cellulosematerialien, Holz, Steinen in Kombination mit Bioziden, Additiv zur Verstärkung und Hydrophobierung von Asphalt, Katalysatoren auf Basis von Metallasiloxanen durch Umsetzung mit Metallsalzen wie z.B. Aluminium-, Titan-, Zink-, Wolfram-, Lanthan-, Blei-, Cadmium-, Antimon-, Kupfer-, Nickel-, Rhodium-, Silber-, Zirkonium-, Rubidium-, Mangan-, Chrom-, Cobalt-, Vanadium-, Molybdän-, Eisen-, Zinn-, Platin-, Palladiumchloriden, Basen die erst in Kontakt mit Wasser wirksam werden und gleichzeitig neutralisieren und hydrophobieren, Zusatzmittel zu Waschpulvern oder Geschirrspülmitteln, Additiv für Farbpigmente, Zusatz zu Beschichtungen gegen Kesselstein-Ablagerungen, Trockenhydrophobierung von allen möglichen Feststoffen (wie Dünger, Lockmittel, Herbizide, Pestizide, Pigmente, hygroskopische Salze, Glasfasern, Steinwolle, Glaskugeln, Natursteine, Sand, Kreide, gelöschter oder gebrannter Kalk, Papier, Fasern s.o, Biozide, Betonpulver, Perlite, Blähton, Blähglas, Metallpulver, Holzmehl, Holzpellets, Hackschnitzel, Keramikpulver, Terracotta-Pulver, Ton, anorganische Füllstoffe), Rieselhilfsmittel, heterogener alkalischer Katalysator zur Steigerung der Reaktivität von Organosiliciumverbindungen z.B. bei Äquilibrierreaktionen, Abbeizzusatz zur Entfernung alter Anstriche, Additiv für Holzfaserplatten (z.B. MDF-Platten).

Bei allen vorgenannten Anwendungen können die Salze (P) auch einer bereits wasserhaltigen Mischung des zu hydrophobierenden Substrats in fester oder ggf. gelöster Form zugesetzt werden. Diese Vorgehensweise bietet sich beispielsweise an, wenn ein Baustoff erst auf der Baustelle mit dem Salz (P) abgemischt werden soll. Das Ausmaß des gewünschten Effekts lässt sich dann einfach über die zugesetzte Menge (P) einstellen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) durchgeführt.

**Herstellungsbeispiel 1: Siliconat aus Methyltrimethoxysilan / Isobutyltrimethoxysilan / KOH (0,5:0,5:1)**

In einem mit Stickstoff inertisierten 500 ml-5-Hals-Rundkolben mit Flügelrührer, Tropftrichter, Thermometer und Wasserabscheider mit Rückflusskühler werden 28 g (0,157 mol) Isobutyltrimethoxysilan (= 2-Methyl-1-propyl-trimethoxysilan, käuflich erhältlich bei abcr GmbH & Co.KG), 21,8 g (0,157 mol) Methyltrimethoxysilan (käuflich erhältlich bei Wacker Chemie AG) und 66 g Isopar E (isoparaffines Kohlenwasserstoffgemisch mit einem Siedebereich von 113 - 143°C, käuflich erhältlich bei ExxonMobil) bei 40°C im Ölbad vorgelegt. Der Wasserabscheider wird mit Isopar E randvoll befüllt. Unter Rühren mit 350 Upm wird eine Lösung von 20,7 g (0,314 mol) Kaliumhydroxid (85%ig, käuflich erhältlich bei AppliChem) in 16,7 g demineralisiertem Wasser binnen 10 Minuten zudosiert. Dabei erwärmt sich die Reaktionsmischung auf 48°C, Durch Nachheizen bringt man auf Siedetemperatur. Das Destillat trennt sich als untere Phase im Wasserabscheider ab. Bis zu einer Siedetemperatur von 118°C sammeln sich 34,3 g klares farbloses Destillat, das nach gaschromatografischer Analyse 87,4 % Methanol, 8,6 % Wasser und 3 % Isobar E enthält. Die Hydrolyse der Methoxyreste ist demnach quantitativ. Während der Destillation scheidet sich ein pastöser weißer Feststoff in der Reaktionsmischung ab. Die flüchtigen Bestandteile werden bei 70°C/4 hPa abdestilliert. Als Rückstand verbleibt ein weißes, grobkörniges Pulver, dessen Feststoffgehalt bei 97,5% liegt (bestimmt mit der Festgehaltswaage HR73 Halogen Moisture Analyzer von Mettler Toledo bei 160°C).

**Nicht erfindungsgemässes Vergleichsbeispiel (Mischung aus Methylsiliconat und Isobutylsiliconat)**

**V1a) Siliconat aus Isobutyltrimethoxysilan / KOH (1:1)**

In einem mit Stickstoff inertisierten 1000 ml-5-Hals-Rundkolben mit Flügelrührer, Tropftrichter, Thermometer und Wasserabscheider mit Rückflusskühler werden 117 g (0,636 mol) Isobutyltrimethoxysilan (= 2-Methyl-1-propyl-trimethoxysilan, käuflich erhältlich bei abcr GmbH & Co.KG) und 155,6 g Isopar E (isoparaffines Kohlenwasserstoffgemisch mit einem Siedebereich von 113 - 143°C, käuflich erhältlich bei ExxonMobil) bei 40°C im Ölbad vorgelegt. Der Wasserabscheider wird mit Isopar E randvoll befüllt. Unter Rühren mit 350 Upm wird eine Lösung von 42 g (0,636 mol) Kaliumhydroxid (85%ig, käuflich erhältlich bei AppliChem) in 32,1 g demineralisiertem Wasser binnen 10 Minuten zudosiert. Dabei erwärmt sich die Reaktionsmischung auf 48°C. Durch Nachheizen bringt man auf Siedetemperatur. Das Destillat trennt sich als untere Phase im Wasserabscheider ab. Bis zu einer Siedetemperatur von 118°C sammeln sich 73,5 g klares farbloses Destillat, das nach gaschromatografischer Analyse 87,1 % Methanol, 8 % Wasser und 3,6 % Isopar E enthält. Die Hydrolyse der Methoxyreste ist demnach quantitativ. Während der Destillation scheidet sich ein pastöser weißer Feststoff in der Reaktionsmischung ab. Die flüchtigen Bestandteile werden bei 70°C/4 hPa abdestilliert. Als Rückstand verbleiben 94 g eines weißen, feinkörnigen Pulvers, dessen Feststoffgehalt bei 99 % liegt (bestimmt mit der Festgehaltswaage HR73 Halogen Moisture Analyzer von Mettler Toledo bei 160°C).

**V1b) Siliconat aus Methyltrimethoxysilan / KOH (1:1)**

In einem mit Stickstoff inertisierten 500 ml-5-Hals-Rundkolben mit Flügelrührer, Tropftrichter, Thermometer und Wasserabscheider mit Rückflusskühler werden 60 g (0,44 mol) Methyltrimethoxysilan (käuflich erhältlich bei Wacker Chemie AG) vorgelegt und 100 g einer 25%igen Kalilauge (0,44 mol KOH) bei 68°C binnen 10 Minuten zudosiert. Nach Abdestillieren des freiwerdenden Methanols erhält man eine klare farblose Lösung. Man setzt 77,2 g Isopar E (isoparaffines Kohlenwasserstoffgemisch mit einem Siedebereich von 113 - 143°C, käuflich erhältlich bei ExxonMobil) zu und erhitzt zum Rückfluss. Das Destillat trennt sich im Wasserabscheider als untere Phase ab, gleichzeitig bildet sich im Reaktionskolben eine feinteilige Suspension. Sobald sich kein Wasser mehr abscheidet wird der Rückstand bei 100°C/4 hPa zur Trockene eingedampft. Man isoliert 46,3 g eines weißen, feinkörnigen Pulvers, dessen Feststoffgehalt bei 99,8 % liegt (bestimmt mit der Festgehaltswaage HR73 Halogen Moisture Analyzer von Mettler Toledo bei 160°C).

**V1c) Siliconat aus Methyltrimethoxysilan / KOH (1:0,85)**

In einem mit Stickstoff inertisierten 500 ml-5-Hals-Rundkolben mit Flügelrührer, Tropftrichter, Thermometer und Wasserabscheider mit Rückflusskühler werden 75 g (0,55 mol) Methyltrimethoxysilan (käuflich erhältlich bei Wacker Chemie AG) und 65 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 350 Upm wird eine Lösung von 30,9 g (0,47 mol) Kaliumhydroxid (85%ig, käuflich erhältlich bei AppliChem) in 19,8 g demineralisiertem Wasser binnen 10 Minuten zudosiert. Dabei erwärmt sich die Reaktionsmischung auf 69°C. Durch Nachheizen bringt man auf Siedetemperatur und reduziert die Rührerdrehzahl auf 50 Upm. Das Destillat trennt sich als untere Phase im Wasserabscheider ab. Bis zu einer Siedetemperatur von 121°C sammeln sich 64,9 g klares farbloses Destillat, das nach gaschromatografischer Analyse 83,3 % Methanol, 14,6 % Wasser und 1,7 % Isopar E enthält. Die Hydrolyse der Methoxyreste im Methyltrimethoxysilan ist demnach quantitativ. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 61,1 g feines, weißes, rieselfähiges Pulver erhalten, dessen Feststoffgehalt bei 100% liegt (bestimmt mit der Festgehaltswaage HR73 Halogen Moisture Analyzer von Mettler Toledo bei 160°C).

**Herstellungsbeispiel 2: Siliconat aus Methyltrimethoxysilan / Isohexyltriethoxysilan / KOH (0,5:0,5:1)**

In einem mit Stickstoff inertisierten 500 ml-5-Hals-Rundkolben mit Flügelrührer, Tropftrichter, Thermometer und Wasserabscheider mit Rückflusskühler werden 45 g (0,18 mol) Isohexyltriethoxysilan (= 4-Methyl-1-pentyltriethoxysilan, Laborprodukt, hergestellt durch Umsetzung von Isohexyltrichlorsilan mit Ethanol, Isohexyltrichlorsilan ist zugänglich durch Hydrosilylierungsreaktion aus 4-Methyl-1-penten und Trichlorsilan), 25 g (0,18 mol) Methyltrimethoxysilan (käuflich erhältlich bei Wacker Chemie AG) und 94,3 g Isopar E (isoparaffines Kohlenwasserstoffgemisch mit einem Siedebereich von 113 - 143°C, käuflich erhältlich bei ExxonMobil) vorgelegt. Unter Rühren mit 300 Upm werden 43 g einer 47%igen Kalilauge (0,36 mol KOH) binnen 10 Minuten zudosiert, dabei wird auf Siedetemperatur erhitzt. Das Destillat trennt sich als untere Phase im Wasserabscheider ab. Bis zu einer Siedetemperatur von 118°C sammeln sich 57,2 g klares farbloses Destillat, das nach gaschromatografischer Analyse 43,3 % Ethanol, 31,8 % Methanol, 23,1 % Wasser und 1,8 % Isopar E enthält. Die Hydrolyse der Ethoxy- und Methoxyreste ist demnach quantitativ. Während der Destillation wandelt sich die Reaktionsmischung in eine Suspension um. Die flüchtigen Bestandteile werden bei 95°C/4 hPa abdestilliert. Als Rückstand verbleibt ein weißes, feinkörniges Pulver, dessen Feststoffgehalt bei 97,1% liegt (bestimmt mit der Festgehaltswaage HR73 Halogen Moisture Analyzer von Mettler Toledo bei 160°C).

**Nicht erfindungsgemässes Vergleichsbeispiel V2 - Siliconat aus Isohexyltrimethoxysilan / KOH (1:1)**

In einem mit Stickstoff inertisierten 500 ml-5-Hals-Rundkolben mit Flügelrührer, Tropftrichter, Thermometer und Wasserabscheider mit Rückflusskühler werden 27 g (0,13 mol) Isohexyltrimethoxysilan (= 4-Methyl-1-pentyltrimethoxysilan, Laborprodukt, hergestellt durch Umsetzung von Isohexyltrichlorsilan mit Methanol, Isohexyltrichlorsilan ist zugänglich durch Hydrosilylierungsreaktion aus 4-Methyl-1-penten und Trichlorsilan) und 25 g Isopar E (isoparaffines Kohlenwasserstoffgemisch mit einem Siedebereich von 113 - 143°C, käuflich erhältlich bei ExxonMobil) vorgelegt. Unter Rühren mit 300 Upm werden 14,7 g einer 50%igen Kalilauge (0,13 mol KOH) binnen 10 Minuten zudosiert und auf Rückfluss erhitzt. Das Destillat trennt sich als untere Phase im Wasserabscheider ab. Bis zu einer Siedetemperatur von 118°C sammeln sich 16 g klares farbloses Destillat, das nach gaschromatografischer Analyse 77,1 % Methanol, 22,1 % Wasser und 0,7 % Isopar E enthält. Die Hydrolyse der Methoxyreste ist demnach quantitativ. Während der Destillation wandelt sich die Reaktionsmischung in eine Suspension um. Die flüchtigen Bestandteile werden bei 70°C/4 hPa abdestilliert. Als Rückstand verbleibt ein weißes, mehliges Pulver, dessen Feststoffgehalt bei 99,4% liegt (bestimmt mit der Festgehaltswaage HR73 Halogen Moisture Analyzer von Mettler Toledo bei 160°C).

**Herstellungsbeispiel 3: Siliconat aus Methyltrimethoxysilan / Isooctyltrimethoxysilan / KOH (0,75:0,25:0,85)**

In einem mit Stickstoff inertisierten 500 ml-5-Hals-Rundkolben mit Flügelrührer, Tropftrichter, Thermometer und Wasserabscheider mit Rückflusskühler werden 20 g (0,085 mol) Isooctyltrimethoxysilan (= 2,4,4-Trimethyl-1-pentyltrimethoxysilan, käuflich erhältlich bei Wacker Chemie AG als SILRES® BS 1316), 35 g (0,25 mol) Methyltrimethoxysilan (käuflich erhältlich bei Wacker Chemie AG) und 41 g Isopar E (isoparaffines Kohlenwasserstoffgemisch mit einem Siedebereich von 113 - 143°C, käuflich erhältlich bei ExxonMobil) vorgelegt. Unter Rühren mit 300 Upm werden 32,1 g einer 50%igen Kalilauge (0,286 mol KOH) binnen 10 Minuten zudosiert. Anschließend wird bei randvoll mit Isopar E befülltem Wasserabscheider auf Rückfluss erhitzt. Das Destillat trennt sich als untere Phase im Wasserabscheider ab. Bis zu einer Siedetemperatur von 118°C sammeln sich 41,4 g klares farbloses Destillat, das nach gaschromatografischer Analyse 80,4 % Methanol und 18,4 % Wasser enthält. Die Hydrolyse der Methoxyreste ist demnach quantitativ. Während der Destillation wandelt sich die Reaktionsmischung in eine Suspension um. Die flüchtigen Bestandteile werden bei 100°C/4 hPa abdestilliert. Als Rückstand verbleiben 46,3 g eines weißen, grobkörnigen Pulvers, dessen Feststoffgehalt bei 99,9% liegt (bestimmt mit der Festgehaltswaage HR73 Halogen Moisture Analyzer von Mettler Toledo bei 160°C).

**Nicht erfindungsgemässes Vergleichsbeispiel V3 (Mischung aus Methylsiliconat und Isooctylsiliconat)**

**V3a) Siliconat aus Isooctyltrimethoxysilan / KOH (1:0,85)**

In einem mit Stickstoff inertisierten 500 ml-5-Hals-Rundkolben mit Flügelrührer, Tropftrichter, Thermometer und Wasserabscheider mit Rückflusskühler werden 60 g (0,25 mol) Isooctyltrimethoxysilan (= 2,4,4-Trimethyl-1-pentyltrimethoxysilan, käuflich erhältlich bei Wacker Chemie AG als SILRES® BS 1316) und 55,7 g Isopar E (isoparaffines Kohlenwasserstoffgemisch mit einem Siedebereich von 113 - 143°C, käuflich erhältlich bei ExxonMobil) vorgelegt. Unter Rühren werden 27,8 g einer 43%igen Kalilauge (0,21 mol KOH) binnen 6 Minuten zudosiert. Anschließend wird bei randvoll mit Isopar E befülltem Wasserabscheider auf Rückfluss erhitzt. Das Destillat trennt sich als untere Phase im Wasserabscheider ab. Bis zu einer Siedetemperatur von 119°C sammeln sich 33,5 g klares farbloses Destillat, das nach gaschromatografischer Analyse 64,6 % Methanol und 34,7 % Wasser enthält. Damit sind 90% der Methoxyreste hydrolysiert. Während der Destillation wandelt sich die Reaktionsmischung in eine Suspension um. Die flüchtigen Bestandteile werden bei 100°C/4 hPa abdestilliert. Als Rückstand verbleiben 53,3 g eines weißen, feinkörnigen Pulvers, dessen Feststoffgehalt bei 99,8% liegt (bestimmt mit der Festgehaltswaage HR73 Halogen Moisture Analyzer von Mettler Toledo bei 160°C).

**V3b) Siliconat aus Methyltrimethoxysilan / KOH (1:0,85)**

In einem mit Stickstoff inertisierten 1000 ml-4-Hals-Laborreaktor mit Flügelrührer, Tropftrichter, Thermometer und Wasserabscheider mit Rückflusskühler werden 350 g (2,525 mol) Methyltrimethoxysilan (käuflich erhältlich bei Wacker Chemie AG) gelöst in 222,8 g Isopar E (isoparaffines Kohlenwasserstoffgemisch mit einem Siedebereich von 113 - 143°C, käuflich erhältlich bei ExxonMobil) vorgelegt. Binnen 12 Minuten werden 233,6 g einer 50%igen Kalilauge (0,214 mol KOH) bei 40°C zudosiert, dabei erwärmt sich die Reaktionsmischung auf Rückfluss (70°C). Man hält durch Nachheizen auf Rückflusstemperatur. Das Destillat trennt sich im Wasserabscheider als untere Phase ab und wird kontinuierlich abgenommen und durch Isopar E ersetzt, gleichzeitig bildet sich im Reaktionskolben eine feinteilige Suspension. Bis zu einer Siedetemperatur von 118°C sammeln sich 294,1 g klares farbloses Destillat, das nach gaschromatografischer Analyse 82,4 % Methanol, 15,7 % Wasser und 1,7% Isopar E enthält. Die Hydrolyse der Methoxyreste ist demnach quantitativ. Man filtriert die Suspension in einer Drucknutsche über eine Seitz K250-Filterplatte und leitet bis zur Gewichtskonstanz Stickstoff hindurch. Es werden 278,5 g sehr feinkörniges, weißes, rieselfähiges Pulver erhalten, dessen Feststoffgehalt bei 99,8 % liegt (bestimmt mit der Festgehaltswaage HR73 Halogen Moisture Analyzer von Mettler Toledo bei 160°C).

**Herstellungsbeispiel 4: Siliconat aus Methyltrimethoxysilan / Isobutyltrimethoxysilan / KOH (0,3:0,7:1)**

In einem mit Stickstoff inertisierten 500 ml-5-Hals-Rundkolben mit Flügelrührer, Tropftrichter, Thermometer und Wasserabscheider mit Rückflusskühler werden 77,4 g (0,42 mol) Isobutyltrimethoxysilan (= 2-Methyl-1-propyl-trimethoxysilan, käuflich erhältlich bei abcr GmbH & Co.KG), 25 g (0,18 mol) Methyltrimethoxysilan (käuflich erhältlich bei Wacker Chemie AG) und 78,3 g Isopar E (isoparaffines Kohlenwasserstoffgemisch mit einem Siedebereich von 113 - 143°C, käuflich erhältlich bei ExxonMobil) bei 40°C im Ölbad vorgelegt. Der Wasserabscheider wird mit Isopar E randvoll befüllt. Unter Rühren mit 300 Upm werden 67,5 g einer 50%igen Kalilauge (0,6 mol KOH) binnen 10 Minuten zudosiert. Dabei erwärmt sich die Reaktionsmischung auf 63°C. Durch Nachheizen bringt man auf Siedetemperatur. Das Destillat trennt sich als untere Phase im Wasserabscheider ab. Es wird von Zeit zu zeit entnommen und jeweils durch Isopar E ersetzt. Bis zu einer Siedetemperatur von 118°C sammeln sich 74 g klares farbloses Destillat, das nach gaschromatografischer Analyse 75,5 % Methanol, 23,6 % Wasser und 0,6 % Isopar E enthält. Somit sind 97% der Methoxyreste hydrolysiert. Während der Destillation bildet sich in der Reaktionsmischung eine Suspension. Die flüchtigen Bestandteile werden bei 70°C/4 hPa abdestilliert. Als Rückstand verbleiben 96,5 g eines weißen, grobkörnigen Pulvers, dessen Feststoffgehalt bei 99,4% liegt (bestimmt mit der Festgehaltswaage HR73 Halogen Moisture Analyzer von Mettler Toledo bei 160°C).

**Herstellungsbeispiel 5: Siliconat aus Methyltrimethoxysilan / Isobutyltrimethoxysilan / KOH (0,75:0,25:0,85)**

In einem mit Stickstoff inertisierten 500 ml-5-Hals-Rundkolben mit Flügelrührer, Tropftrichter, Thermometer und Wasserabscheider mit Rückflusskühler werden 15,2 g (0,082 mol) Isobutyltrimethoxysilan (= 2-Methyl-1-propyl-trimethoxysilan, käuflich erhältlich bei abcr GmbH & Co.KG), 34,4 g (0,247 mol) Methyltrimethoxysilan (käuflich erhältlich bei Wacker Chemie AG) und 65,9 g Isopar E (isoparaffines Kohlenwasserstoffgemisch mit einem Siedebereich von 113 - 143°C, käuflich erhältlich bei ExxonMobil) bei 40°C im Ölbad vorgelegt. Der Wasserabscheider wird mit Isopar E randvoll befüllt. Unter Rühren mit 250 Upm wird eine Lösung von 18,5 g (0,28 mol) Kaliumhydroxid (85%ig, käuflich erhältlich bei AppliChem) in 11,9 g demineralisiertem Wasser binnen 10 Minuten zudosiert. Dabei erwärmt sich die Reaktionsmischung auf 46°C. Durch Nachheizen bringt man auf Siedetemperatur. Das Destillat trennt sich als untere Phase im Wasserabscheider ab. Es wird von Zeit zu Zeit entnommen und jeweils durch Isopar E ersetzt. Bis zu einer Siedetemperatur von 118°C sammeln sich 37,1 g klares farbloses Destillat, das nach gaschromatografischer Analyse 85,6 % Methanol, 10,8 % Wasser und 2,8 % Isopar E enthält. Die Hydrolyse der Methoxyreste ist demnach quantitativ. Während der Destillation bildet sich in der Reaktionsmischung eine Suspension. Man filtriert die Suspension in einer Drucknutsche über eine Beco KD3-Filterplatte und trocknet den Filterkuchen anschließend bei 110°C/4 hPa. Es werden 37,8 g feinkörniges, weißes Pulver erhalten, dessen Feststoffgehalt bei 99,8 % liegt (bestimmt mit der Festgehaltswaage HR73 Halogen Moisture Analyzer von Mettler Toledo bei 160°C).

**Herstellungsbeispiel 6: Siliconat aus Methyltrimethoxysilan / Isooctyltrimethoxysilan / KOH (0,8:0,2:0,85)**

In einem mit Stickstoff inertisierten 500 ml-5-Hals-Rundkolben mit Flügelrührer, Tropftrichter, Thermometer und Wasserabscheider mit Rückflusskühler werden 25 g Methanol vorgelegt und auf Rückfluss erhitzt. Anschließend werden parallel eine Mischung aus 30 g (0,125 mol) Isooctyltrimethoxysilan (= 2,4,4-Trimethyl-1-pentyltrimethoxysilan, käuflich erhältlich bei Wacker Chemie AG als SILRES® BS 1316) und 69,5 g (0,5 mol) Methyltrimethoxysilan (käuflich erhältlich bei Wacker Chemie AG) und 72,7 g einer 40%igen Kalilauge (0,53 mol KOH) binnen 30 Minuten zudosiert. Man erhitzt danach eine halbe Stunde auf Rückfluss und destilliert die vorgelegte Methanolmenge (= 25 g) ab. Die farblose, klare Reaktionsmischung wird in einen Tropftrichter umgefüllt und in 81 g siedendes Isopar E (isoparaffines Kohlenwasserstoffgemisch mit einem Siedebereich von 113 - 143°C, käuflich erhältlich bei ExxonMobil) eingetropft. Die Hydrolysatlösung wird dabei so dosiert, dass die Temperatur nicht unter 100°C sinkt (ca. 88 g/h). Das schlagartige Verdampfen der flüchtigen Lösungsbestandteile Methanol und Wasser führt zur augenblicklichen Ausbildung einer gut rührbaren, weißen Suspension von Siliconatsalz in Isopar E. Das Destillat trennt sich als untere Phase im Wasserabscheider ab. Die Suspension wird danach im Ölbad bei 100°C zur Trockne eingedampft. Als Rückstand verbleiben 81,7 g eines weißen, feinkörnigen Pulvers, dessen Feststoffgehalt bei 92 % liegt (bestimmt mit der Festgehaltswaage HR73 Halogen Moisture Analyzer von Mettler Toledo bei 160°C).

**Anwendungsbeispiele mit zementbasierten Trockenmörteln**

**Anwendungsbeispiele: Hydrophobierung eines Trockenmörtels mit erfindungsgemäßen Alkali-Siliconat-Pulvern und Vergleich mit nicht erfindungsgemäßen Alkali-Siliconat-Mischungen**

Es wurde ein Einlagenputz folgender Zusammensetzung verwendet:

| | |
|---|---|
| 15,15% | Weisszement CEMI 42,5 R-DW |
| 3,03% | Walhalla-Edelkalkhydrat |
| 20,20% | Calcilit 0,1 - 0,5mm ( $CaCO_3$) |
| 12,48% | Calcilit 100 K ( jetzt KA 40 ) |
| 0,05% | Tylose MH 15002 P. 6 |
| 0,10% | Amylotex Plus |
| 27,27% | Ulmer Weiss |
| 20,20% | Calcilit 0,5 - 1,0mm |

Um statistisch belastbare Ergebnisse zu erhalten werden immer mindestens 2 Prüfkörper mit identischer Dosierung an Hydrophobierungsmittel hergestellt.

Vorgehensweise:

Mischen der vorgegebenen Mengen Trockenmörtel mit der Menge des zu prüfenden pulverförmigen Hydrophobierungsmittel mit Hilfe des IKA-Laborrührers ( Mischzeit: mind. 20s bei ca. 200 U/min). Unter Rühren werden 25 Gew.-% Trinkwasser auf die Menge Putz zugegeben und es wird weiter gerührt bis die Masse cremig und streichfähig ist (Rührzeit: mind. 60s bei ca. 1000 - 1300 U/min ).

Die Mischung wird in runde PVC-Ringe ( Durchmesser: 8cm, Höhe: 2cm ), die auf einer mit Filterpapier bespannten Platte liegen, gegossen. Evtl. entstandene Luftblasen werden mit einem Holzspatel entfernt. Um eine gleichmäßige Oberfläche zu erhalten wird, mit einer Spachtel mit leichten Hin-und-HerBewegungen glatt abgezogen.

Die Prüfkörper 24 Stunden werden bei Raumtemperatur getrocknet, dann aus den Ringen genommen und anschließend 7 Tage bei Normklima ( 23°C / 50% Luftfeuchte ) gelagert. Vor der Wasserlagerung wird das Trockengewicht der Prüfkörper bestimmt. Zur Bestimmung der Wasseraufnahme in Anlehnung an DIN 18180 werden die Proben so in Trinkwasser gelegt, dass sie von 5cm Wasser bedeckt sind. Die Proben müssen so liegen, dass auch an die Unterseite Wasser gelangen kann. Nach 1h, 2h, 3h, 6h und 24h werden die Proben herausgenommen, von oberflächlich anhaftendem Wasser befreit, gewogen und anschließend ins Wasser zurückgelegt. Nach 24h wird die Wasserlagerung beendet.

Die Berechnung der relativen Wasseraufnahme erfolgt mittels folgender Gleichung:

$$WA = \frac{m_2 - m_1}{m_1} * 100\%$$

$m_1$: Gewicht des Prüfkörpers vor der Wasserlagerung
$m_2$: Gewicht des Prüfkörpers nach der Wasserlagerung

**Ergebnisse**

In den Tabellen sind jeweils die Ergebnisse der 24h-Wasserlagerung der Prüfkörper mit den erfindungsgemäßen gemischten Siliconaten denen von äquimolaren Mischungen der reinen Siliconate gegenübergestellt.

**Tabelle 1**

| Nr. | Siliconat-Pulver A | Zusatz in Gew.-% | Siliconat-Pulver B | Zusatz in Gew.-% | Wasseraufnahme nach 24h in Gew.-% |
|---|---|---|---|---|---|
| A0* | - | - | - | - | 13,60 |
| A1 | (1) Isobutyl:Methyl:K = 0,5:0,5:1 | 0,2 | - | - | 2,34 |
| A2* | (V1a) Isobutyl:K=1:1 | 0,2 | - | - | 2,56 |
| A3* | (V1a) Isobutyl:K=1:1 | 0,11 | (V1b) Methyl:K=1:1 | 0,09 | 7,86 |
| A4 | (4) Isobutyl:Methyl:K = 0,7:0,3:1 | 0,2 | - | - | 1,99 |
| A5* | (V1b) Methyl:K=1:1 | 0,2 | - | - | 16,20 |
| *nicht erfindungsgemäß | | | | | |

Diese Versuchsserie zeigt, dass das erfindungsgemäße gemischte Methyl/Isobutylsiliconat in A1 sowohl dem reinen Isobutylsiliconat (A2) als auch der entsprechenden Mischung aus Isobutyl- und Methylsiliconat (A3) als auch dem reinen Methylsiliconat (A5) in der Hydrophobierwirkung überlegen ist. Außerdem wird beim Vergleich von A1, A2 und A4 erkennbar, dass ein optimales Verhältnis von Methyl/Isobutyl existiert.

**Tabelle 2**

| Nr. | Siliconat-Pulver A | Zusatz in Gew.-% | Siliconat-Pulver B | Zusatz in Gew.-% | Wasseraufnahme nach 24h in Gew.-% |
|---|---|---|---|---|---|
| B0* | - | - | - | - | 13,60 |
| B1 | (2) Isohexyl:Methyl:K = 0,5:0,5:1 | 0,2 | - | - | 3,35 |
| B2* | (V2) Isohexyl:K=1:1 | 0,2 | - | - | 4,98 |
| B3* | (V2) Isohexyl:K=1:1 | 0,12 | (V1b) Methyl:K=1:1 | 0,08 | 10,22 |
| *nicht erfindungsgemäß | | | | | |

Diese Versuchsserie zeigt ebenfalls, dass das erfindungsgemäße gemischte Methyl/Isohexylsiliconat in B1 sowohl dem reinen Isohexylsiliconat (B2) als auch der entsprechenden Mischung aus Isohexyl- und Methylsiliconat (B3) in der Hydrophobierwirkung überlegen ist.

**Tabelle 3**

| Nr. | Siliconat-Pulver A | Zusatz in Gew.-% | Siliconat-Pulver B | Zusatz in Gew.-% | Wasseraufnahme nach 24h in Gew.-% |
|---|---|---|---|---|---|
| C0* | - | - | - | - | 13,60 |
| C1 | (3) Isooctyl:Methyl:K = 0,25:0,75:0,85 | 0,2 | - | - | 3,83 |

(fortgesetzt)

| Nr. | Siliconat-Pulver A | Zusatz in Gew.-% | Siliconat-Pulver B | Zusatz in Gew.-% | Wasseraufnahme nach 24h in Gew.-% |
|---|---|---|---|---|---|
| C2* | (V3a) Isooctyl:K=1:0,85 | 0,07 | (V3b) Methyl:K=1:0,85 | 0,13 | 15,00 |
| C3 | (3) Isooctyl:Methyl:K = 0,25:0,75:0,85 | 0,3 | - | - | 2,61 |
| C4* | (V3a) Isooctyl:K=1:0,85 | 0,11 | (V3b) Methyl:K=1:0,85 | 0,19 | 15,00 |
| *nicht erfindungsgemäß | | | | | |

Diese Versuchsserie zeigt ebenfalls, dass das erfindungsgemäße gemischte Methyl/Isooctylsiliconat in C1 und C3 der entsprechenden Mischung aus Isooctyl- und Methylsiliconat (C2 und C4) in der Hydrophobierwirkung überlegen ist.

**Anwendungsbeispiele mit Gipsputzen**

In den Anwendungsbeispielen G1-G4 werden marktübliche Gipsputze in Pulverform (Goldband Fertigputzgips Leicht und Maschinenputzgips MP 75 der Firma Knauf Gips KG, Iphofen/Deutschland) mit variierenden Mengen an Kalium-Organosiliconat-Pulver in trockener Form effektiv vermischt. Anschließend wird diese Trockenmischung gemäß der auf der Gips-Verpackung angegebenen Rezeptur unter Rühren portionsweise zum Anmachwasser gegeben und in Anlehnung an DIN EN 196-1 mit einem elektrisch betriebenen Flügelrührer bei moderater Drehzahl zu einem homogenen Slurry verrührt (Goldband Fertigputz Leicht: 300 g Gipspulver und 200 g Wasser, Maschinenputz MP 75: 300 g Gipspulver und 180 g Wasser, jeweils gemäß Packungsangabe). Anschließend wird der erhaltene Slurry in PVC-Ringe (Durchmesser: 80 mm, Höhe 20 mm) gegossen und der Gips bei 23 °C und 50 % relativer Luftfeuchte über 24 Stunden ausgehärtet. Nach der Entschalung der Gipsprüfkörper aus den Ringen wird in einem Umlufttrockenschrank bei 40 °C bis zur Gewichtskonstanz der Prüfkörper getrocknet. Zur Bestimmung der Wasseraufnahme in Anlehnung an DIN EN 520 werden die Prüfkörper nach Bestimmung des Trockengewichts für 120 min unter Wasser gelagert, wobei die Proben horizontal auf Metallgitter gelegt werden und der Wasserüberstand über dem höchsten Punkt der Prüfkörper 5 mm beträgt. Nach 120 min werden die Prüfkörper aus dem Wasser genommen, auf einem mit Wasser gesättigten Schwamm abgetropft und aus dem Nassgewicht sowie dem Trockengewicht die prozentuale Wasseraufnahme gemäß der Formel

$$\text{Prozentuale Wasseraufnahme} = \{[\text{Masse(nass)} - \text{Masse(trocken)}]/\text{Masse(trocken)}\} \cdot 100\ \%$$

errechnet.

**Anwendungsbeispiel G1: Hydrophobierung zweier Gipsputze mit einem Kalium-Organosiliconatpulver mit einem Molverhältnis iso-Butyl- zu Methylrest von 0,25:0,75 sowie einem Molverhältnis Alkali-Metall zu Silicium von 0,85 (Produkt aus Herstellungsbeispiel 5).**

Tabelle 4 zeigt, dass ein Kalium-Organosiliconat-Pulver mit einem vergleichsweise kleinen Anteil an iso-Butylgruppen und einem Molverhältnis Alkali-Metall zu Silicium von 0,85 Gipsputze sehr effizient hydrophobiert. 5 % Wasseraufnahme werden bei beiden Putzen mit allen Dosierungen deutlich unterschritten.

**Anwendungsbeispiel G2: Hydrophobierung zweier Gipsputze mit einem Kalium-Organosiliconatpulver mit einem Molverhältnis iso-Butyl- zu Methylrest von 0,70:0,30 sowie einem Molverhältnis Alkali-Metall zu Silicium von 1,00 (Produkt aus Herstellungsbeispiel 4).**

Wird der Anteil an Butylgruppen im Vergleich zu Anwendungsbeispiel 1 erhöht, wirkt sich diese Erhöhung nicht auf die gemessenen Wasseraufnahmen aus, die Werte in Tabelle 4 liegen nahe den Werten von Anwendungsbeispiel G1. 5 % Wasseraufnahme werden bei beiden mit allen Dosierungen deutlich unterschritten.

**Anwendungsbeispiel G3: Hydrophobierung zweier Gipsputze mit einem Kalium-iso-Butylsiliconatpulver mit einem Molverhältnis Alkali-Metall zu Silicium von 1,00 (Produkt aus Herstellungsbeispiel V1a)).**

Verwendet man im Vergleich zu Anwendungsbeispiel G2 ein rein iso-Butyl-substituiertes Kalium-Organosiliconatpulver, so steigen selbst bei einem Molverhältnis Alkali-Metall zu Silicium von 1,00 bei beiden Putzen die gemessenen Wasseraufnahmen deutlich an.

**Anwendungsbeispiel G4: Hydrophobierung zweier Gipsputze mit einem Kalium-Organosiliconatpulver mit einem Molverhältnis iso-Hexyl- zu Methylrest von 0,50:0,50 sowie einem Molverhältnis Alkali-Metall zu Silicium von 1,00 (Produkt aus Herstellungsbeispiel 2).**

Tabelle 4 zeigt, dass ein Kalium-Organosiliconat-Pulver mit einem Anteil an 50% iso-Hexylgruppen und einem Molverhältnis Alkali-Metall zu Silicium von 1,00 Gipsputze effizient hydrophobiert.

**Anwendungsbeispiel G5: Hydrophobierung zweier Gipsputze mit einem Kalium-iso-Hexylsiliconatpulver mit einem Molverhältnis Alkali-Metall zu Silicium von 1,00 (Produkt aus Herstellungsbeispiel V2).**

Verwendet man im Vergleich zu Anwendungsbeispiel G4 ein rein iso-Hexyl-substituiertes Kalium-Organosiliconatpulver, so liegen selbst bei einem Molverhältnis Alkali-Metall zu Silicium von 1,00 bei beiden Putzen die gemessenen Wasseraufnahmen im Bereich des unbehandelten Vergleichswerts. 5 % Wasseraufnahme werden bei beiden Putzen mit allen Dosierungen nicht erreicht.

**Anwendungsbeispiel G6: Hydrophobierung zweier Gipsputze mit einem Kalium-Methylsiliconatpulver mit einem Molverhältnis Alkali-Metall zu Silicium von 0,85 (Produkt aus Herstellungsbeispiel V1c).**

Tabelle 4 zeigt, dass ein reines Kalium-Methylsiliconat-Pulver im Gegensatz zum entsprechenden gemischten System (aus Isobutyl und Methyl, s. Anwendungsbeispiel G1) Gipsputze weniger effizient hydrophobiert.

Tabelle 4 Wasseraufnahme von Gipsprüfkörpern in Anlehnung an DIN EN 520

| Dosierung (Gew.-% bzgl. Gips-trocken-substanz) | Anwendungsbeispiel | | | | | | | | | | | |
|---|---|---|---|---|---|---|---|---|---|---|---|---|
| | G1 Knauf MP 75 | G1 Knauf Gold-band | G2 Knauf MP 75 | G2 Knauf Gold-band | G3* Knauf MP 75 | G3* Knauf Gold-band | G4 Knauf MP 75 | G4 Knauf Gold-band | G5* Knauf MP 75 | G5* Knauf Gold-band | G6* Knauf MP 75 | G6* Knauf Gold-band |
| 0 | 39,9 | 36,3 | 39,9 | 36,3 | 39,9 | 36,3 | 39,9 | 36,3 | 39,9 | 36,3 | 39,9 | 36,3 |
| 0,2 | 1,46 | 1,05 | 1,27 | 0,99 | 2,54 | 1,38 | 4,93 | 12,01 | 41,78 | 43,44 | 10,2 | 31,5 |
| 0,4 | 0,94 | 1,01 | 1,16 | 1,51 | 2,68 | 3,21 | 2,70 | 2,38 | 40,21 | 38,38 | 3,4 | 2,3 |
| 0,6 | 0,84 | 1,14 | 2,68 | 1,78 | 3,52 | 3,22 | 2,49 | 2,18 | 38,89 | 37,94 | 2,0 | 1,2 |

*nicht erfindungsgemäß

EP 2 714 623 B1

**Patentansprüche**

1. Feste Salze (P) von Organosilanolen, von deren Hydrolyse/Kondensationsprodukten, oder von Organosilanolen zusammen mit deren Hydrolyse/Kondensations-produkten mit Alkali-Kationen, bei denen das Molverhältnis von Kation zu Silicium 0,5 bis 3 beträgt und von denen mindestens 1 Mol-% und höchstens 99 Mol-% der vorhandenen Organoreste aus Methyl- und Ethylresten ausgewählt werden und die übrigen Organoreste mindestens 4 C-Atome enthalten, herstellbar nach einem Verfahren bei dem in einem ersten Schritt Organosilane der allgemeinen Formel 1

$$(R^1)_a Si(Y)_b (-Si(R^2)_{3-c}(Y)_c)_d \qquad (1)$$

oder deren Hydrolyse/Kondensationsprodukte, oder die Organosilane der allgemeinen Formel 1 zusammen mit deren Hydrolyse/Kondensationsprodukten,
wobei

**$R^1$, $R^2$** einen einwertigen Si-C gebundenen unsubstituierten oder durch Halogenatome, Aminogruppen, Thiolgruppen, $C_{1-6}$-Alkyl oder $C_{1-6}$-Alkoxygruppen substituierten Silylgruppen substituierten Kohlenwasserstoffrest mit 1 bis 30 Kohlenstoffatomen, in dem eine oder mehrere, einander nicht benachbarte -$CH_2$-Einheiten durch Gruppen -O-, -S- , oder-$NR^3$- ersetzt sein können und in denen eine oder mehrere, einander nicht benachbarte =CH-Einheiten durch Gruppen -N= ersetzt sein können,
**$R^3$** Wasserstoff, einen einwertigen unsubstituierten oder durch Halogenatome oder $NH_2$-Gruppen substituierten Kohlenwasserstoffrest mit 1 bis 8 Kohlenstoffatomen,
**Y** Wasserstoff, F, Cl, Br oder $OR^4$
**$R^4$** einen einwertigen unsubstituierten oder durch Halogenatome oder Silylgruppen substituierten Kohlenwasserstoffrest mit 1 bis 10 Kohlenstoffatomen, in dem eine oder mehrere, einander nicht benachbarte $CH_2$-Einheiten durch Gruppen -O-, -S-, oder -$NR^3$- ersetzt sein können und in denen eine oder mehrere, einander nicht benachbarte =CH-Einheiten durch Gruppen -N= ersetzt sein können,
**a** die Werte 1, 2 oder 3 und
**b, c, d** die Werte 0, 1, 2 oder 3 bedeuten, mit der Massgabe, dass b+c $\geq$ 1 und a+b+d = 4,
in Gegenwart von Wasser und basischem Salz von Alkali-Kationen, hydrolysiert werden,
wobei die Menge an basischem Salz so bemessen ist, dass auf ein Mol Silicium 0,5 Mol bis 3 Mol Kationen kommen, und falls die Organosilane der allgemeinen Formel 1 Reste ausgewählt aus F, Cl, Br aufweisen, pro Mol F, Cl und Br ein weiteres Mol an basischem Salz vorhanden ist und mindestens 1% und höchstens 99% der Reste **$R^1$** und **$R^2$** aus Methyl- und Ethylresten ausgewählt werden und die übrigen Reste **$R^1$** und **$R^2$** mindestens 4 C-Atome enthalten,
in einem zweiten Schritt die freigesetzte Verbindung HY als Gas entfernt wird,
in einem dritten Schritt in der Mischung vorhandenes Wasser entfernt wird und in einem vierten Schritt das Salz (P) als Feststoff isoliert wird.

2. Feste Salze (P) nach Anspruch 1, bei denen 10% bis 90% aller Organoreste ausgewählt werden aus Methyl- und Ethylresten.

3. Feste Salze (P) nach Anspruch 1 oder 2, bei denen die Organoreste Kohlenwasserstoffreste mit 1 bis 8 Kohlenstoffatomen sind.

4. Verwendung der festen Salze (P) gemäss Anspruch 1, 2 und 3 als Hydrophobiermittel.

5. Verwendung nach Anspruch 4 für die Hydrophobierung von mineralischen Substraten, Baustoffen und Fasern.

6. Pulverförmige Baustoffe, enthaltend die festen Salze (P) gemäss Anspruch 1, 2 und 3.

**Claims**

1. Solid salts (P) of organosilanols, of their hydrolysis/condensation products, or of organosilanols together with their hydrolysis/condensation products with alkali metal cations, wherein the molar ratio of cation to silicon is 0.5 to 3 and of which at least 1 mol% and not more than 99 mol% of the organic radicals present are selected from methyl and ethyl radicals and the other organic radicals contain at least 4 C atoms, which can be produced by a process in which in a first step organosilanes of the general formula 1

$$(R^1)_a Si(Y)_b (-Si(R^2)_{3-c}(Y)_c)_d \qquad (1)$$

or their hydrolysis/condensation products, or the organosilanes of the general formula 1 together with their hydrolysis/condensation products,

where

$R^1$ and $R^2$ are each a monovalent, Si-C-bonded hydrocarbon radical which is unsubstituted or is substituted by halogen atoms, amino groups, thiol groups or $C_{1-6}$ alkyl- or $C_{1-6}$ alkoxy-substituted silyl groups and has 1 to 30 carbon atoms, in which one or more nonadjacent $-CH_2-$ units may be replaced by groups -O-, -S-, or $-NR^3-$, and in which one or more nonadjacent =CH- units may be replaced by groups -N=,

$R^3$ is hydrogen or a monovalent hydrocarbon radical having 1 to 8 carbon atoms which is unsubstituted or substituted by halogen atoms or $NH_2$ groups,

$Y$ is hydrogen, F, Cl, Br, or $OR^4$,

$R^4$ is a monovalent hydrocarbon radical which is unsubstituted or substituted by halogen atoms or silyl groups and has 1 to 10 carbon atoms, in which one or more nonadjacent $CH_2$ units may be replaced by groups -O-, -S-, or $-NR^3-$, and in which one or more nonadjacent =CH- units may be replaced by groups -N=,

$a$ denotes the values 1, 2 or 3, and

$b$, $c$, and $d$ denote the values 0, 1, 2 or 3,

with the proviso that $b+c \geq 1$ and $a+b+d = 4$,

are subjected to hydrolysis in the presence of water and basic salt of alkali metal cations,

the amount of basic salt being calculated such that per mole of silicon there is 0.5 mol to 3 mol of cations, and, if the organosilanes of the general formula 1 contain radicals selected from F, Cl, and Br, a further mole of basic salt is present per mole of F, Cl, and Br, and at least 1% and not more than 99% of the radicals $R^1$ and $R^2$ are selected from methyl and ethyl radicals and the other radicals $R^1$ and $R^2$ contain at least 4 C atoms,

in a second step, the liberated compound H$Y$ is removed, in the form of gas,

in a third step, water present in the mixture is removed, and in a fourth step, the salt (P) is isolated in the form of a solid.

2. Solid salts (P) according to Claim 1, in which 10% to 90% of all the organic radicals are selected from methyl radicals and ethyl radicals.

3. Solid salts (P) according to Claim 1 or 2, in which the organic radicals are hydrocarbon radicals having 1 to 8 carbon atoms.

4. Use of the solid salts (P) according to Claims 1, 2 and 3 as hydrophobizing agents.

5. Use according to Claim 4 for hydrophobizing mineral substances, building materials and fibers.

6. Building materials in powder form, comprising the solid salts (P) according to Claims 1, 2 and 3.

## Revendications

1. Sels solides (P) d'organosilanols, de leurs produits d'hydrolyse/de condensation, ou d'organosilanols conjointement avec leurs produits d'hydrolyse/de condensation avec des cations alcalins, dans lesquels le rapport molaire du cation au silicium vaut de 0,5 à 3 et dont au moins 1 % en moles et au maximum 99 % en moles des radicaux organiques présents sont choisis parmi les radicaux méthyle et éthyle et les autres radicaux organiques contiennent au moins 4 atomes de carbone, pouvant être préparés selon un procédé dans lequel dans une première étape on hydrolyse des organosilanes de formule générale 1

$$(R^1)_a Si(Y)_b (-Si(R^2)_{3-c}(Y)_c)_d \qquad (1)$$

ou leurs produits d'hydrolyse/de condensation, ou les organosilanes de formule générale 1 conjointement avec leurs produits d'hydrolyse/de condensation,

où

$R^1$, $R^2$ représentent un radical hydrocarboné monovalent lié par une liaison Si-C, ayant de 1 à 30 atomes de carbone, non substitué ou substitué par des atomes d'halogène, des groupes amino, des groupes thiol, des groupes silyle substitués par des groupes alkyle en $C_1-C_6$ ou alcoxy en $C_1-C_6$, dans lequel une ou plusieurs

unités -CH$_2$- non adjacentes entre elles peuvent être remplacées par des groupes -O-, -S- ou -NR$^3$- et dans lequel une ou plusieurs unités =CH- non adjacentes entre elles peuvent être remplacées par des groupes -N=, R$^3$ représente un atome d'hydrogène, un radical hydrocarboné monovalent ayant de 1 à 8 atomes de carbone, non substitué ou substitué par des atomes d'halogène ou des groupes NH$_2$,

**Y** représente un atome d'hydrogène, F, Cl, Br ou OR$^4$,

**R$^4$** représente un radical hydrocarboné monovalent ayant de 1 à 10 atomes de carbone, non substitué ou substitué par des atomes d'halogène ou des groupes silyle, dans lequel une ou plusieurs unités CH$_2$ non adjacentes entre elles peuvent être remplacées par des groupes -O-, -S- ou -NR$^3$- et dans lequel une ou plusieurs unités =CH- non adjacentes entre elles peuvent être remplacées par des groupes -N=,

**a** représente les valeurs 1, 2 ou 3 et

**b, c, d** représentent les valeurs 0, 1, 2 ou 3,

étant entendu que b + c $\geq$ 1 et a+b+d = 4,
en présence d'eau et d'un sel basique de cations alcalins,
en choisissant la quantité de sel basique de manière que 0,5 mole à 3 moles de cations soient présentes par mole de silicium, et si les organosilanes de formule générale 1 comportent des radicaux choisis parmi F, Cl, Br, encore une mole de sel basique soit présente par mole de F, Cl et Br et au moins 1% et au maximum 99 % des radicaux R$^1$ et R$^2$ étant choisis parmi les radicaux méthyle et éthyle et les autres radicaux R$^1$ et R$^2$ contenant au moins 4 atomes de carbone,
dans une deuxième étape on élimine sous forme de gaz le composé HY libéré,
dans une troisième étape on élimine l'eau présente dans le mélange et dans une quatrième étape on isole le sel (P) sous forme de solide.

2. Sels solides (P) selon la revendication 1, dans lesquels 10% à 90 % de tous les radicaux organiques sont choisis parmi les radicaux méthyle et éthyle.

3. Sels solides (P) selon la revendication 1 ou 2, dans lesquels les radicaux organiques sont des radicaux hydrocarbonés ayant de 1 à 8 atomes de carbone.

4. Utilisation des sels solides (P) selon l'une quelconque des revendications 1, 2 et 3, en tant qu'agent d'hydrophobie.

5. Utilisation selon la revendication 4 pour l'hydrophobisation de substrats minéraux, matériaux de construction et fibres.

6. Matériaux de construction pulvérulents, contenant les sels solides (P) selon l'une quelconque des revendications 1, 2 et 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2803561 A
- EP 650968 A
- WO 2010052201 A
- DE OS10107614 A
- US 2898221 A
- DE 2245927
- US 3956570 A
- EP 992565 A